# EUROPEAN PATENT APPLICATION

(11) **EP 1 554 951 A1**
(43) Date of publication of application: **20.07.2005**
(21) Application number: 02787986.5
(22) Date of filing: 25.11.2002
(51) Int. Cl.: A47B 87/00, A47B 96/20, B27M 3/18

(54) **FURNITURE PRODUCTION SYSTEM**

(30) Priority: 23.11.2001 CL 10739901
(71) Applicant: Lira Campino, Luis Antonio, Providencia, Santiago (CL); Trias de Bes, Gonzalo, 08009 Barcelona (ES)
(72) Inventor: Lira Campino, Luis Antonio, Providencia, Santiago (CL); Trias de Bes, Gonzalo, 08009 Barcelona (ES)
(74) Representative: Gallego Jiménez, José Fernando
(86) International application number: PCT/ES2002/000557
(87) International publication number: WO 2003/043465

(57) **Abstract**

A furniture production system consisting of a product comprised of series of structural construction panels with prefabricated modular measurements, and by a process of transformation of manufactured boards into series of panels with modular measurements. The production system provides manufacturing, construction and measurement solutions in the same production unit, which means we can satisfy specific measurement and organization requirements of varied furniture designs, making maximum use of the material.

A preferred field of application of the present invention is the industry that uses manufactured board-type starting material; and the flatpack furniture industry, in particular custom made-to-order furniture for specific use requirements.

## Description

The present invention relates to a furniture production system consisting of a product comprised of series of structural construction panels with prefabricated modular measurements, and by a process of transformation of manufactured boards into series of panels with modular measurements. The production system provides manufacturing, construction and measurement solutions in the same production unit, which means we can satisfy specific measurement and organization requirements of varied furniture designs, making maximum use of the material.

A preferred field of application of the present invention is the industry that uses manufactured board-type starting material; and the flatpack furniture industry, in particular custom made-to-order furniture for specific use requirements.

### Background of the invention

By varied furniture designs, we understand variety of units where certain functional components, the measurements and arrangement thereof are determined; a variety limited by the manufacturing restrictions imposed by the starting material characteristics and the technology available for its production; at present, said technology is known as NCC (Numerical Control Centre), which is characterized in that it produces high-speed precision performance in the execution of varied work routines with layout instructions and specific tools on manufactured boards available in the trade.

In the industry of flatpack furniture, custom made-to-order for specific use requirements, the measurement and organization, which is always different, of the components of said furniture is translated in material wastage of manufactured boards, produced by the random coincidence of measurements and the shape of a board manufactured with said characteristics of the structural constructions units. At present, said wastage is reduced by the use of devices which define the layout of the cutting axes of a manufactured board so that maximum use is made of the material in relation to the measurements of the units produced therefrom.

The production of custom made-to-order furniture is currently performed by the execution of consecutive processes that can be arranged in three different stages. A first stage of furniture composition, where the specific use requirements ordered by the user are interpreted by the manufacturer and are translated in the components of the piece of furniture, which are arranged in a certain way; components with defined form, measurements and functions, which may be a work surface, an open container or shelf, a closed container such as drawers or cupboards with doors, or other functions. Once the solution devised by the manufacturer is approved by the user, the manufacturing stage is initiated, where the construction units of each one of the structural units is made from the components defined in the composition stage, said structural construction units being produced by the partition of manufactured boards and the incorporation of rigid coupling mechanisms between said units, constructed in them or separate from them and, finally, a furniture construction stage, where all the units of structural construction manufactured in the previous stage are assembled, coupled and fixed together so that the result is a piece of furniture with the measurements, components and organization specially conceived to satisfy particular requirements of use.

As flatpack custom made-to order furniture are unique pieces of furniture, resolved case by case and, therefore, complex to manufacture, they tend to be expensive products; but that does not affect the need for solutions of this nature; for this reason, economic systems have been developed which manage to satisfy said demand in the constructive aspect, by offering prefabricated construction elements or functional units which are components of predetermined pieces of furniture.

One of those construction systems can be found in patent CL 37,213 which consists of a construction unit of structures which can be structured and finished at the same time, easily handled, characterized in that it is comprised of a body whose shape is an elongated straight rectangular parallelepiped, of strip type, which has, preferably, twenty-one perforations distributed uniformly along its longitudinal axis, forming a part that serves as a structural unit, which is traversed through any its perforations by a pin-type cylindrical element, which may be long or short, with wire at its ends, so that new structures can be assembled, the strip elements and the pin element being linked to another complementary perforated cylindrical element, of washer type, serving as a separator and/or filler, all of this being complemented with a cubic element perforated with wire, nut-type, as fixing element of the unit, which is located at the ends of the pin-type cylindrical elements. However, this solution refers more to strip type structural construction elements than panel-type elements.

In the state of the art, there are varied construction solutions for rigid furniture structures with structural panels which incorporate coupling mechanisms between said panels for the purpose of rigidly adhering arrangements thereof, to produce modular measurement furniture components, components that are adhered to one another, continuously and flush, to produce furniture structures, such as the solution disclosed in DE19902887, by Lerche&Korner, which discloses a means of constructing folding boxes comprised of two pairs of panels whose proportion is modular to one another, which are coupled by means of a hinge mechanism located on opposite edges of said panels, and which discloses a means of giving rigidity to continuous groups thereof, flush with one of the edges of all of them, adhered by means of the solid sides of the boxes by pins positioned in perforations made in the panels, said perforations located so that they can give rigidity to the groups of contiguous, flush, rigid modular boxes.

This panel typology is used in different structural construction solutions of furniture delimited by modular measurements, used as structural construction elements of rigid boxes or cupboards, used as furniture composition units, as can be verified in the patents EP0943265, where Krause&Welke's invention is disclosed; DE19605893, by Hueber; DE29503071 U, by Bartels&Kollegen; EP0302025, by Hengartner, and in JP11 089647, by the Japanese, Masumura; and in US 3995845; US5893617 and WO 87/00406 among others.

Krause&Welkes's invention consists of a cupboard system consisting of components structured from two pairs of panels delimited by modular measurements, where a multiple coupling mechanism is constructed between the panels which makes them demountable, used so that, coupled together, they form cupboards with modular perimeter measurements; and a coupling mechanism between the cupboards, located so that they can give rigidity to groups of contiguous flush modular cupboards. Hueber's construction system, DE19605893, resolves the rigidity of the structure by coupling units comprised of five panels; Hengartner, EP0302025, incorporates a metal frame to aid the fixing of the panels to one another; and Masumura, JP11089647, gives rigidity to the boxes by a film covering the panels arranged contiguously and flush.

US 3885845 discloses a rigid box comprised of two square panels with different coupling mechanisms. A first panel has, on only one of its sides, a trapezoid-type space and, on the other side, another space which corresponds to a specular image of the previous. The second panel has, on only one of its sides, a trapezoid-type projection, and on the opposite side another projection which corresponds to the specular image of the previous. To ensure the joint, elongated pins are used which fit laterally to prevent movement between the panels. US 5893617 discloses a furniture construction system formed by rectangular panels grooved at the edges which require an additional element to be housed in the grooves and produce the joints between the panels. WO 87/00406 discloses a rigid box or unit formed by at least three different types of panels. A first panel or base panel is formed by a board whereon one of its sides has a groove very close to the edge, used to house a second type of board which has a projection or flange on its periphery. There is a third board which has a mixed groove and projection system to permit some variants.

Said construction systems found in the state of the art have in common the way of resolving the joints between the panels by means of assembly mechanisms which perform the function of joining and fixing the structural construction units of rigid frame-type furniture without having to use glue to keep them adhered to one another. The difference between said construction systems lies in the quality of the means that resolve the coupling together of panels, independent or incorporated therein; in the quantity of structural construction elements with which the construction of a rigid frame is resolved; or in the way one panel is assembled with another, or of coupling rigid frames comprising a rigid structure.

Any of said construction systems are suitable for resolving the construction of furniture articles, industrializing the use of construction systems such as those indicated, permits a manufacturer of made-to-order flatpack furniture to standardize the way of constructing the different pieces of furniture requested by their customers, to develop a process line to manufacture any piece of furniture, use the same tools, and check the quantity of associated suppliers and services; managing to reduce effort and time involved in resolving the creation of pieces and the construction of carried designs of pieces of furniture which are always different.

Nevertheless, whatever the construction solution used, the repetition, case by case, of the process of furniture definition, where the individual solution is created for each customer, is an inevitable step, which a construction system, such as those found in the state of the art and others, cannot resolve; because it is outside the scope of their possibilities to do so, given that said systems facilitate the construction of the components and the structure of the furniture, but it is not within their capacities to provide solutions which have relation to the measurements of said components or how they are organized in the structure of the pieces of furniture.

Using any of said solutions, we can resolve the rigidity of arrangements of panels where their perimeter is delimited by modular measurements, used as functional components which are interchangeably arranged to configure various models of furniture; however said solutions do not mention the means that provides the production of arrangements of modular flush boxes, merit of the modular quality of the measurements of the structural panels and the location of the coupling mechanisms between the panels, nor the measurement ratio between said modular units or their capacity to provide a determined measurement, nor the solutions related to the manufacturing of said panels.

### Description of the Invention

A main object of the present invention is to overcome the problems associated with the production technique of custom made-to-order furniture, providing a production system with a means that incorporates predetermined construction, measurement and manufacturing solutions in the same unit, with which one manages to satisfy specific functional, measurement and organization requirements of varied models of rigid structures used in furniture products.

Another main object of the present invention is to provide a solution for manufacturing said units, using a process to transform manufactured boards in units with modular measurements which are whole parts of said boards, which means we make maximum use of the manufactured board material.

Another object of the present invention is to provide a predetermined means of construction and measurement formed by structural construction panels with modular measurements, forming series comprised of board-type elements with a constant thickness throughout all of them and delimited by a parallelepiped-shaped area, the measurement of a least one of the edges of said area being equal to the measurement of at least one of the sides of all the panels comprising the series; and the proportion between the measurement of at least one of the edges of said area and the measurement of at least one of the sides of all the panels comprising said series being a modular measurement ratio.

Another object of the present invention is to provide multiple coupling mechanisms between two panels, constructed on the length of the panel side which is common throughout the series, at a constant distance between the edges of the panel and the edges of the mechanism between one panel and another; which are compatible to be coupled interchangeably with complementary mechanisms, with which maximum combination is obtained between different panels.

Another object of the present invention is to provide coupling mechanisms between structural construction panels, as a means of rigid assembly between two panels positioned on non-parallel planes, in this case, perpendicular, with edge joints and flush joints; on parallel planes, adhered by the area other than the panel thickness; and on one plane, adhered through the area of panel thickness.

Another object of the present invention is to provide coupling mechanisms between panels with modular measurements, as a means of the addition of modular measurement units so that, by coupling the panels with discrete modular measurement, we attain a continuous measurement equivalent to the sum of modular units, for which it uses a constant measurement margin, equal to the overlap measurement between the panels present in the coupling mechanism; that is incorporated in the modular measurement unit, adding or subtracting from it; necessary to cover all the solutions of encounters between panels equipped with the structural coupling mechanisms.

Another object of the present invention is to provide a mortise and tenon-type coupling mechanism constructed on the edge of a panel, comprised of two complementary parts, each one of them being a succession of volumetric bodies described by the volume of a rectangular truncated prism, distanced from one another by the specular projection measurement of the same body; and the sequence of symmetrical volumetric bodies being arranged in relation to a axis of symmetry located equidistant from the sides of the panel other than those where said assembly mechanism is found.

Another object of the present invention is to provide a construction system for rigid structures used in furniture products, by fixing contiguous, flush arrangements delimited by modular measurements, product of the coupling of panels by means of an assembly mechanism between the components of a series and a coupling mechanism between flush groups of boxes.

Another object of the present invention is to provide a system for the composition of continuous measurements by the sum of discrete units, comprised of one unit of modular measurement and by units equivalent to successive sums of said modular unit, which have a constant measurement difference between them, with the aim that, by constructing a measurement different to any of those by sums, the desired measurement is obtained with a maximum constant difference in relation to the measurement attained, minus the value of the modular unit measurement, whose graphic representation is a modular measurement framework or matrix.

Another object of the present invention is to provide a manufacturing process of the structural construction means formed by series of prefabricated modular panels, produced by the transformation of manufactured boards into series of modular panels, providing the layout of partition axes of said boards in order to produce units whose area is delimited by geometric patterns limited by series of modular measurements proportional to a constant measurement; so that, by equalling said constant measurement with the measurements of the side of a manufactured board, each modular measurement unit is a whole part of any of the measurements of the sides of said board; so that by the partition of one board, we can produce series of different panels and, in any case, obtain maximum use of the manufactured board material.

Another object of the present invention is to provide a process to define series of modular measurements comprised of a modular unit and by modular units equivalent to sums of said modular unit in constant successive quantities: defined by duplications of a modular measurement and an auxiliary measurement, where the measurement ratio between them is such that both them and their duplications are whole multiple amounts of a constant measurement; and to provide a means of geometric representation of said series of modular measurements by means of quadrilateral geometric patterns, delimited by combinations of pairs of said modular units, with the aim of constructing several series of geometric patterns which have, on at least one of its sides, a measurement common to all of them and a side with a modular measurement throughout all of them; and that, in turn, any of the measurements of its sides is a whole multiple of a constant measurement.

The objects of the invention thus defined can be arranged in three complementary systems which converge in an array of structural construction prefabricated panels with modular measurements which provide solutions in each one of said production stages for custom made-to-order furniture for particular use requirements. A furniture composition system formed by an arrangement of units of modular measurement with which it is possible to form any measurement with a constant maximum difference equal to the value of the modular unit represented by a framework of modular measurements which act as a guide to define the layout of the furniture components and the arrangement thereof. A manufacturing system of said furniture, providing layout axes of manufactured boards which are transformed into series of structural construction panels delimited by said modular measurements obtaining maximum use of the material, and a construction system, providing rigid coupling mechanisms between said panels so that they provide the capacity for interchangeable coupling between them and are a means of adding modular units by means of which another modular measurement is produced.

The convergence of the three solutions in the same panels permits changing the chronological order of furniture production stages, as the decisions involved in the design process of a piece of furniture relating to the definition of the functional components, its measurements and organization, can be performed after the manufacturing stage of the panels which form it. Therefore, the use of the present production systems makes it possible for a decision essential for the concept of a piece of furniture to be performed in the distribution stage of the product; because, with the use of these panels, we produce a furniture article with no more intervention than that typical of the distributor of those products; who stores, selects, groups, packages and dispatches the panels comprising a piece of furniture determined by it or by the user, made to the satisfaction of precise requirements of use and at the time that it is specifically required; because with a limited quantity of panels belonging to a series that have compatible assembly mechanisms and can be manufactured from a single type of board without material wastage; i.e. with maximum resource economy, it is possible to compose and construct an infinity of furniture structures used in many typologies of furniture articles, satisfying production requirements of those articles with precision equivalent to standards shown in custom made-to order products in the industry of the field.

In this way, the occupation of the present production system in the furniture industry does not only to change the chronological sequence of traditional production stages: 1 compose, 2 manufacture and 3 construct; for 1 manufacture, 2 compose and 3 construct; but it also produces the modification of the agents that perform the production processes of furniture articles. It transfers the performance of the processes of the furniture article production which is included in their own sales and dispatch services, to the distributing agents of the field, as has been indicated; and the performance of the process of designing furniture projects to the distributor or user, e.g. determining the functional components, the measurements and organization of a piece of furniture, by the use of a prefabricated construction means, published in an electronic catalogue distributed on Internet; for commercial purposes, for example; which means the user can easily model a custom made furniture solution, value and request services typical of a distributor at the time of his/her particular requirement; for this, there are interactive media constructed with technological supports available at present, of web page and CAD electronic catalogue-type.

CAD technology facilitates the use of virtual three-dimensional iconographic models, which permit making representations of the panels; of components constructed with them; of functional accessories and examples of structures composed for specific furniture articles. It has facilities for selecting, from a menu, the elements of composition, panels or boxes, arranging them at the composer's wish, and submitting information regarding the information of the panels used, the breakdown of the amount for each one of them and instructions for assembling the furniture composed.

The sales information sent by the distributors over Internet may be available in real time in the manufacturing plant supplying the panel production orders, with the aim of replacing the stock available for immediate delivery in the distribution centres, or to cover sales made with fixed delivery period, reduced to a time limit of 24 hours with current technology. This advantage permits operating commercial management with zero replacement stock, resolved by the use of a flexible panel manufacturing system which produces zero material wastage, for which it is sufficient to accumulate panel manufacturing orders with the same form and measurements in a quantity which is equivalent to the yield of said panels per board, and if this does not occur, maximum use of the material can also be made as the partition of the boards is performed by axes that are distanced by modular measurements, therefore, the remains of a board will have measurements that can be split in identical modular measurements.

It is therefore possible to transfer the manufacturing process of these panel arrays to a flatpack furniture supplier, when they are made using boards manufactured from wood as starting material, for example; for the board manufacturer, meaning the integration of processes which transform its product and convert it in panels, dispatched as a component for the construction of furniture articles, such as the boards manufactured by it and supplied to that industry; because the manufacturer of these panels does not manufacture furniture, as the decision of how and when to split a board is not conditioned by prior information related to the definition of a determined piece of furniture, but by indeterminate pieces of furniture.

The fundamental difference between the traditional furniture article production process, in particular, custom made-to order manufacturing for particular use requirements, and that which derives from the use of the present system, is that the manufacturer of said articles does not need to predict or interpret the demand for furniture desired by the user to manufacturer them, because this production system enables that primordial information to be provided by the user and that their requirements can be immediately satisfied.

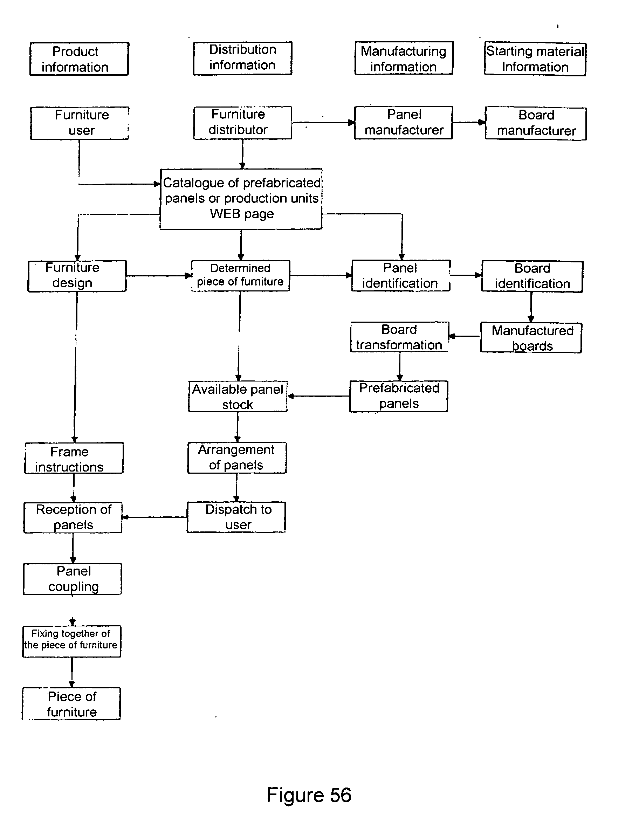

The diagram of Fig. 56 describes the flow of information between the user, the furniture product distributor, the manufacturer of the array of panels and the board manufacturer, inherent to the use of the present furniture article production system. The processes involved in the production of furniture articles each one of them performs can be identified by a vertical reading of the diagram of said figure, when, in vertical columns, there appears the squares where the processes performed by each one of them is identified and where the transfer of said agents is shown.

In short, it can be stated that the innovative results obtained with the use of the present production system are derived from using series of construction elements of prefabricated manufactured board structures, of panel-type; which have in common a means of assembly compatible between one panel and another, which does not need glue to keep them adhered to one another; and where modular measurement ratio are found between the measurement of at least one side of the panel sides and the other.

With the aim of achieving said objectives and thus obtain the disclosed results, the present invention provides a process to define a modular measurement unit and series of modular units which are proportional to a constant measurement, which are represented by arrangements of geometric patterns used to define the form and measurements of the panels, the layout of the cutting axes of said panels in the boards and to delimit the form and measurements of the functional components and the form of arranging them. To discover the particular capacity of this production system to multiply the use of the construction units, it will be described with reference to models whose content and drawings form an integral part of this presentation.

To better understand the characteristics of this flatpack furniture production system, we will firstly describe the processes related to the definition of the modular measurement unit and the associated modular measurement units by the use of geometric patterns; then, we will describe the characteristics of the measurement system associated to said measurements; the construction system between said panels as regards the assembly mechanisms, their capacity for coupling and combination to construct rigid arrangements; and finally we will describe the rigid arrangements used as a structural and functional support of various furniture components and furniture made from them.

### Description of the drawings

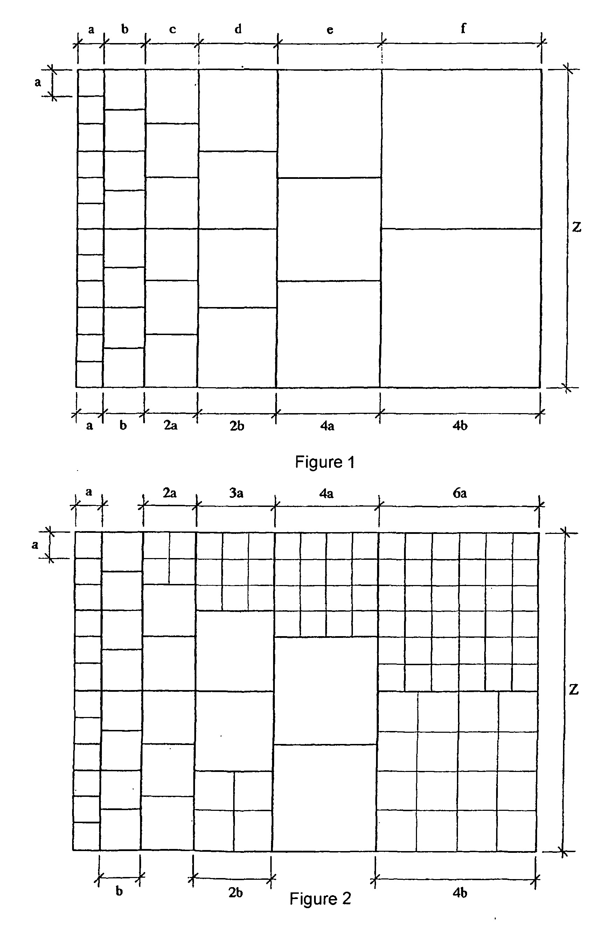

Fig. 1 is an instrument to define modular measurement units, which we will call geometric pattern matrix, and is comprised of square geometric patterns whose sides have measurements called 'a', 'b', 'c'. 'd', 'e', 'f', etc arranged in rows of equal contiguous flush units, forming columns whose longest side has a measurement length equal on all of them, which we will call 'Z'. Said measurements are such that a=Z/n, b=Z/m, c=2a, d=2b, e=2c, f=2d, etc; with 'n' and 'm' being different Whole Numbers greater than two; which permits obtaining a series of square geometric patterns whose sides have measurements which are duplications of the measurement 'a', formed by the measurements "a", "2a", "4a", etc; and another series whose sides have measurements which are duplications of measurement "b", formed by the measurements "b", "2b", "4b", etc.
Fig. 2 is the geometric pattern matrix described in Fig.1 with a defined n:m measurement ratio, which means a series of square geometric patterns is produced whose sides have measurements which are sums of the measurement "a", formed by the measurements "a", "2a", "3a" and "4a" and another series whose sides have measurements which are sums of the measurement "2a", formed by the measurements "2a", "4a" and "6a". The n:m ratio is defined by equalling a desired measurement such as "3a" with the measurement multiple of "b" located among the columns of the matrix of Fig.1 closest to said desired measurement; in this case between "2a"and "4a", i.e. "2b", so that making 2b=3a, we produce n:m=3:2.

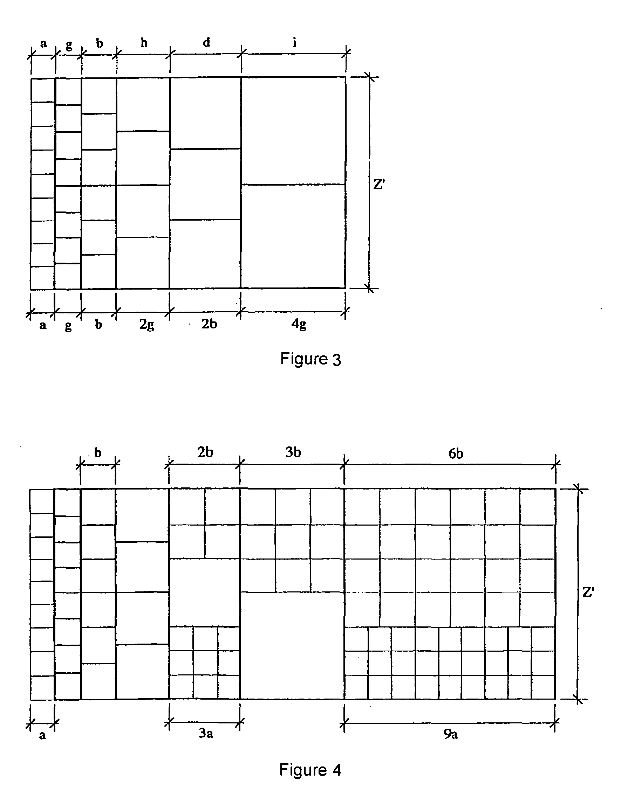

Fig. 3 is a geometric pattern matrix defined with the same processes used to define the matrix of Fig. 1, and is formed by square geometric patterns whose sides have measurements called 'g', 'b', 'h', 'd' and 'i', arranged in columns whose longest side has a measurement length we will call 'Z'.
Fig. 4 is the geometric pattern matrix defined in Fig. 3 with a measurement ratio n:m=4:3, which means a series of square geometric patterns is produced whose sides have measurements which are sums of measurement "b", comprised of measurements "b", "2b", "3b" and "6b"; and another series whose sides have measurements which are sums of measurement "a", formed by the measurements "a", "3a" and "9a". The n:m ratio is defined in this case making 3b=4a in the matrix of Fig. 1, from where it is produced that n:m=4:3. But 3:2=n:m=4:3, does not exist simultaneously so that the measurement Z is different from the measurement Z' and has a measurement ratio Z:'Z'=4:3.

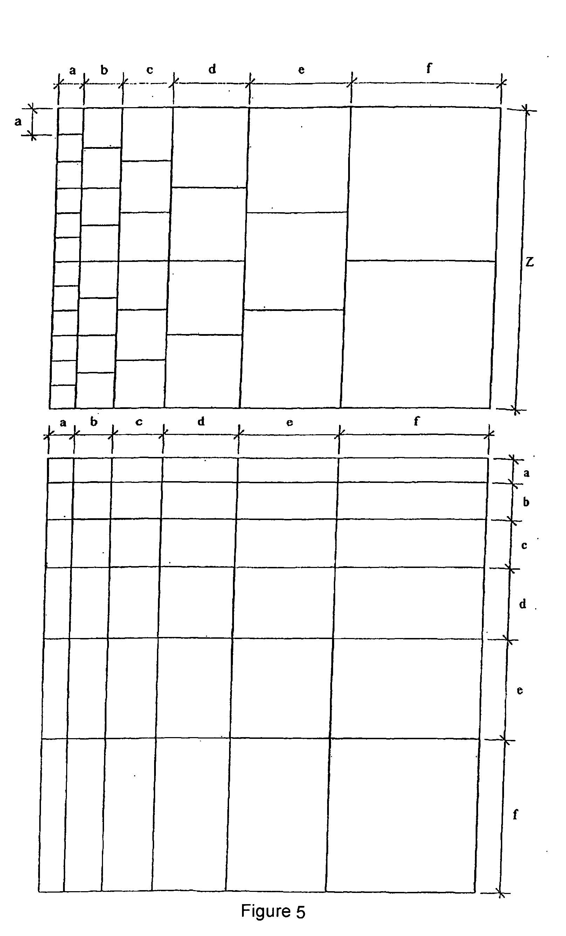

Fig. 5 is the measurement projection matrix of the geometric patterns of the matrix of Fig. 1 comprised of rectangular geometric patterns, whose sides are delimited by measurements that are the result of translating each one of the measurements to the sides of the square geometric patterns defined in the matrix of Fig. 1 until the edges of each one of the sides of all the other patterns which is obtained by arranging said square patterns by the vertices aligned to their diagonal. Said projection of measurements generates series of geometric patterns formed by patterns with a constant measurement on one of their sides and a modular measurement on the other.

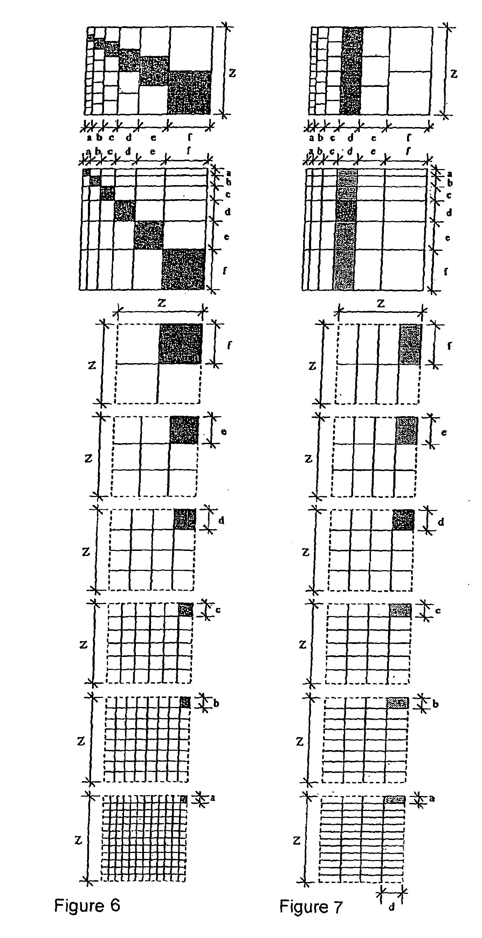

Fig. 6 is a diagram that shows arrangements comprised of various units of the same square geometric pattern defined in the matrix of Fig. 1, which has in common the same measurement and square perimeter shape with side "Z".
Fig. 7 is a diagram which shows arrangements comprised of several units of a same square and rectangular geometric pattern which form series with a common side whose measurement is "d" units, defined in the matrix of Fig. 5. Said arrangements have in common the same measurement and square perimeter shape with side "Z", so that an area delimited by a constant perimeter is divisible in different quantities of parts equal to one another, said parts being the geometric patterns defined in the matrix of Fig. 5.

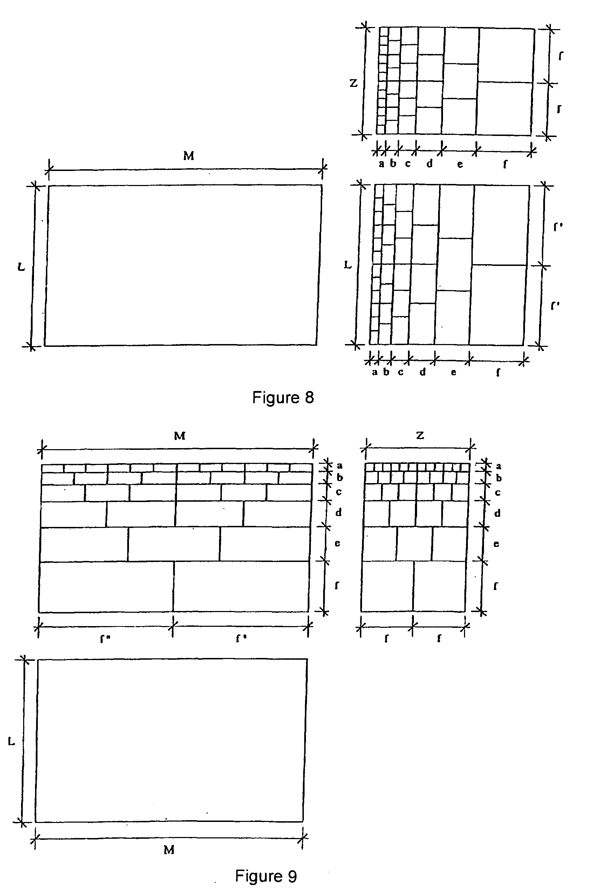

Fig. 8 is a diagram which shows the translation of the modular measurement ratios defined in a geometric pattern matrix with side "Z" to a rectangular area with side "L" on at least one of its sides; proceeding to multiply the measurement of the side of the square geometric patterns of the geometric pattern matrix with side "Z", parallel to side "Z" of the matrix, by a constant factor, which we will call "X", so that X=L/Z; and it means that each one of the measurements of each one of the sides of all these new geometric patterns is a whole fraction of the measurement "L".
Fig. 9 is a diagram which shows the translation of the modular measurement ratios defined in a geometric pattern matrix to a rectangular area with side "M" on at least one of its sides; proceeding to multiply the measurement of the sides of the square geometric pattern of the geometric pattern matrix with side "Z", parallel to side "Z" of the matrix, by a constant factor, which we will call "Y", so that Y=M/Z; and it means that each one of the measurements of one of the sides of all these new geometric patterns is a whole fraction of measurement "M".

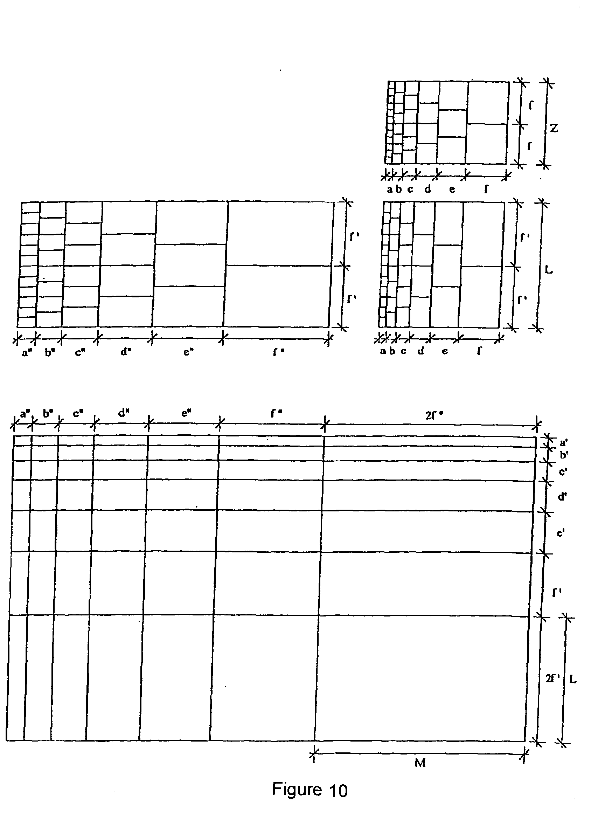

Fig. 10 is a diagram which shows the translation of the modular measurement ratios defined in a geometric pattern matrix with side "Z" to a rectangular area with sides "L" by "M"; proceeding to multiply the measurement of the side of the square geometric patterns of the geometric pattern matrix with side "Z" of the matrix, by a constant factor "X"; and of the side of the sides which are not parallel to said side of the matrix by constant factor "Y", so that means that each one of the measurements of each one of the sides of all these new geometric patterns is a whole fraction of the measurement "L" and of the measurement "M", and therefore a whole fraction of a rectangular area with sides "L" by "M".

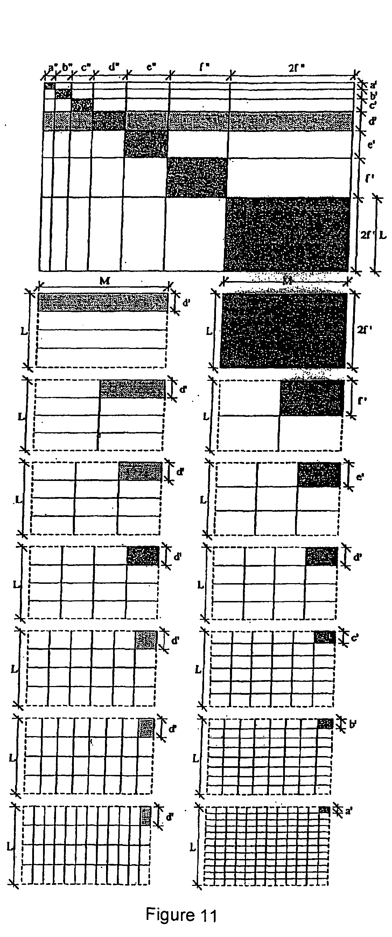

Fig. 11 is a diagram which shows the usage of the geometric patterns defined in the matrix of Fig. 10 to make the layout cut of manufactured panels from manufactured boards which are standard in the trade, whose measurements are "L" and "M" units; through the axes laid out by the parallel and perpendicular lines drawn in the interior of the delimited perimeter by sides whose measurements are "L" and "M" units, drawn with a dotted line in the figure, and in that way, optimize the usage of the material of manufactured boards when any of the panels are manufactured with said starting material.

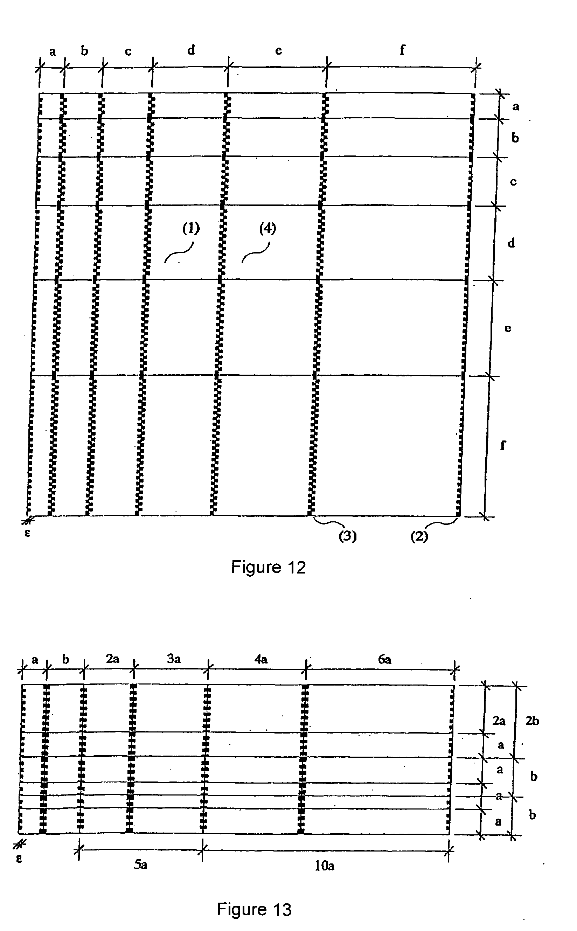

Fig. 12 is a plan view of an array of panels whose measurements are related to one another as they are in the geometric patterns defined in the matrix of Fig. 1; and it is a model of panels manufactured by the use of a board with sides "L" and "M", with ratio between the measurements L:M=1:2 and thickness "ε", standard in the trade; where the area of the panel assigned for the construction of complementary assembly mechanisms (2) and (3), to be used for coupling some panels with others; panels (1) with panels (4), for example, is indicated with a dashed line.
Fig. 13 is a plan view of all the panels of Fig. 12, ordered in columns whose longest side is equal from one column to another, flush with one of the edges of one of the sides of the panels without the assembly mechanism; where it is possible to see the constant measurement difference throughout each one of them equal to "a" and "b" units, and the capacity to obtain different measurements to those available by the addition thereof.

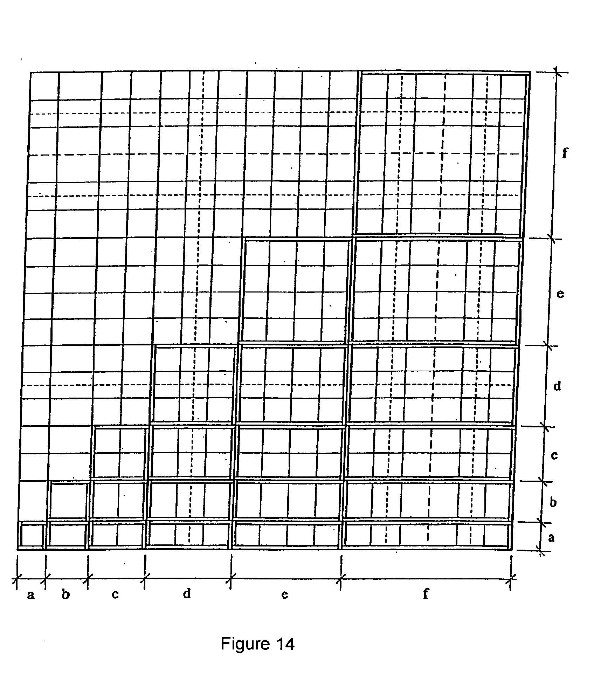

Fig. 14 is a front elevation view of an array of rigid boxes constructed from a series of panels with assembly mechanisms compatible with one another, like the series of Fig. 12, so that we can multiply the capacity for combination between "N" quantity of different panels obtaining N(N+1)/2 different rigid arrangements, each one of them comprised of two pairs of panels. With six panels, 21 different forms are produced.

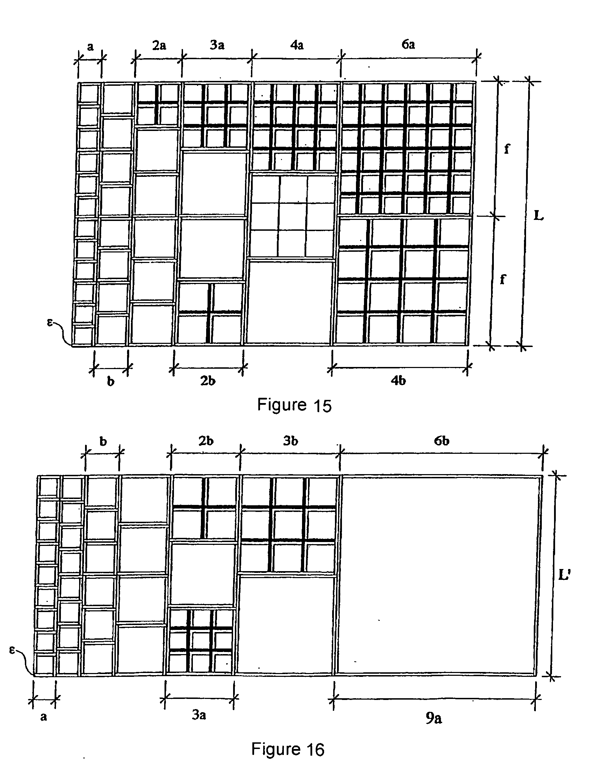

Fig. 15 is a front elevation view of a group of square rigid boxes constructed from a series of panels which have a complementary assembly mechanism between them, and the measurement of the side of the panel without the assembly mechanism is modular from one panel to another, where it can be observed that it is possible to produce the measurement 'L' by the addition of different measurements, and that the range of precision in the production of a measurement less than 'L', by the sum of said measurements, is of 'a' units as it can be observed in the upper part of the figure, where the modular framework of said measurement is shaded; or of 'b' units, as appears in the lower part of the figure, where the modular framework corresponding to said measurements is shaded.
Fig. 16 is a front elevation view of an array of square rigid boxes constructed from a from a series of panels which have a complementary assembly mechanism between them, and the measurement of the side of the panel without the assembly mechanism is modular from one panel to another, where it can be observed that an arrangement of boxes maintains the measurement ratio existing between the geometric patterns which produce the panels, with which they are constructed.

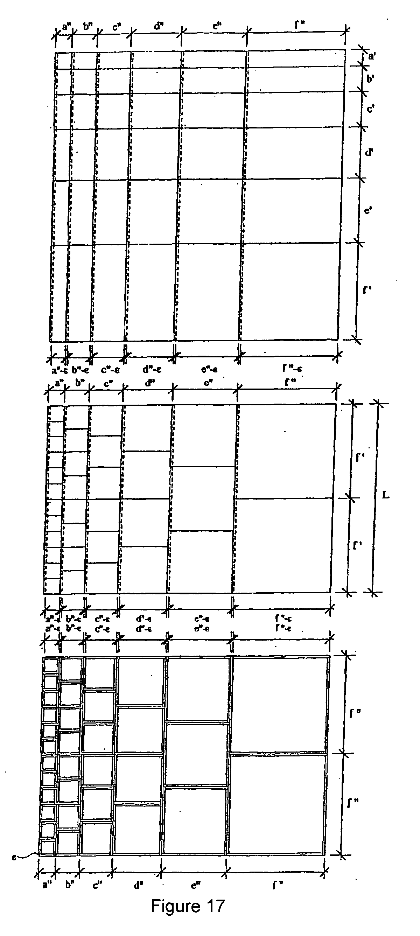

Fig. 17 shows panels equivalent to those drawn in Fig. 16 constructed with assembly mechanisms so that they connect the panels with a flush joint, unlike those indicated in said figure, which interconnect the panels with a corner joint.

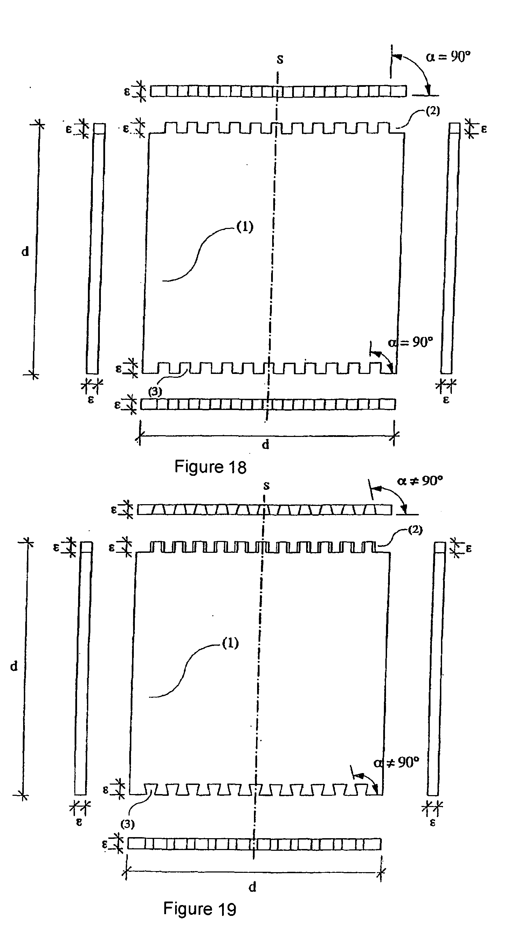

Fig. 18 is a plan, elevation and profile view of a panel equivalent to that indicated with number (1) in fig. 12, which has a tongue-and-groove type assembly mechanism comprised of a sequence of straight rectangular volumetric bodies distanced from one another by the measurement of the specular projection thereof, located on the edges and symmetrical in relation to the centre of the side of the panel with the assembly mechanism; and it couples the panels with two degrees of freedom of movement.

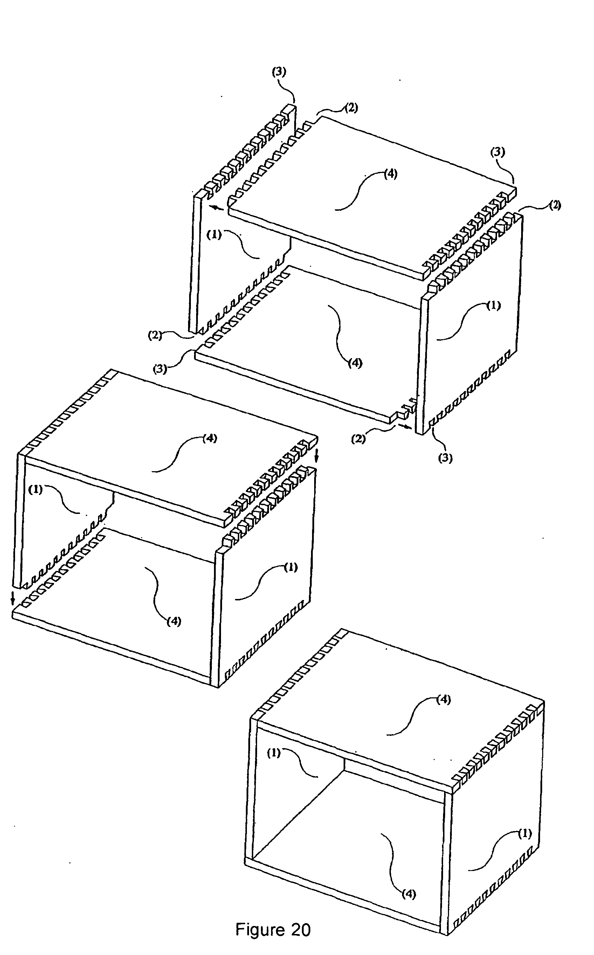

Fig. 19 is a plan, elevation and profile view of a panel equivalent to that defined in Fig. 18 which has the volumetric body component of the assembly mechanism modified with the aim of coupling the panels with one degree of freedom of movement, by the fixing at α# 90° of the base angle a, located at the base of the isosceles triangle which produces the form of said volumetric bodies.
Fig. 20 is an isometric view which describes the form of assembling a rigid box constructed from two pairs of panels (1) and (4) whose assembly mechanisms are complementary between one panel and another, and have parts (2) and (3) of said mechanism on the same panel, so that it is necessary to previously assemble two pairs of them to construct a box.

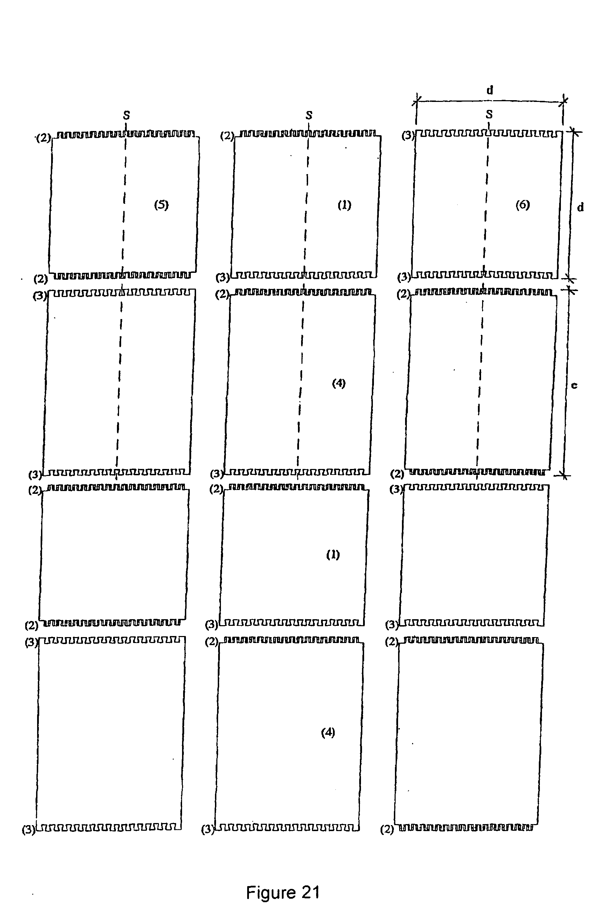

Fig. 21 is a plan view of panels (5) and (6), equivalent to panels (1) and (4), with parts (2) or (3) of the assembly mechanism on the same panel, so that it is not necessary to previously assemble two pairs of them to construct a box; and it is necessary to duplicate the quantity of different panels to obtain the same quantity of rigid boxes different to those produced with panels (1) and (4).

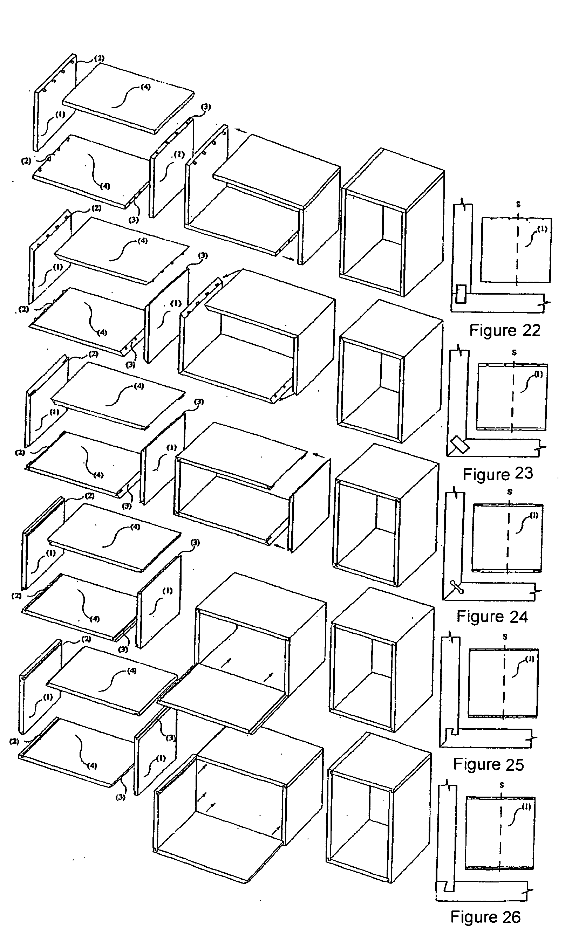

Fig. 22 is a plan view of a panel (1) with parts (2) and (3) of the assembly mechanism on the same panel, located symmetrically in relation to the (S) axis, an isometric view of a box constructed with two pairs of said panels, and a pair of panels (4) with parts (2) and (3) of the assembly mechanism on the same panel, a view of a form of coupling; and a cut-away view of the parts of the of flush wedge corner joint-type assembly mechanism.
Fig. 23 is a plan view of a panel (1) with parts (2) and (3) of the assembly mechanism on the same panel, located symmetrically in relation to the (S) axis, an isometric view of a box constructed with two pairs of said panels, and a pair of panels (4) with parts (2) and (3) of the assembly mechanism on the same panel, a view of a form of coupling; and a cut-away view of the parts of the mitre and wedge corner joint-type assembly mechanism.
Fig. 24 is a plan view of a panel (1) with parts (2) and (3) of the assembly mechanism on the same panel, located symmetrically in relation to the (S) axis, an isometric view of a box constructed with two pairs of said panels, and a pair of panels (4) with parts (2) and (3) of the assembly mechanism on the same panel, a view of a form of coupling; and a cut-away view of the parts of the mitre and tongue corner joint-type assembly mechanism.
Fig. 25 is a plan view of a panel (1) with parts (2) and (3) of the assembly mechanism on the same panel, located symmetrically in relation to the (S) axis, an isometric view of a box constructed with two pairs of said panels, and a pair of panels (4) with parts (2) and (3) of the assembly mechanism on the same panel, a view of a form of coupling; and a cut-away view of the parts of the mortise and tenon corner joint-type assembly mechanism

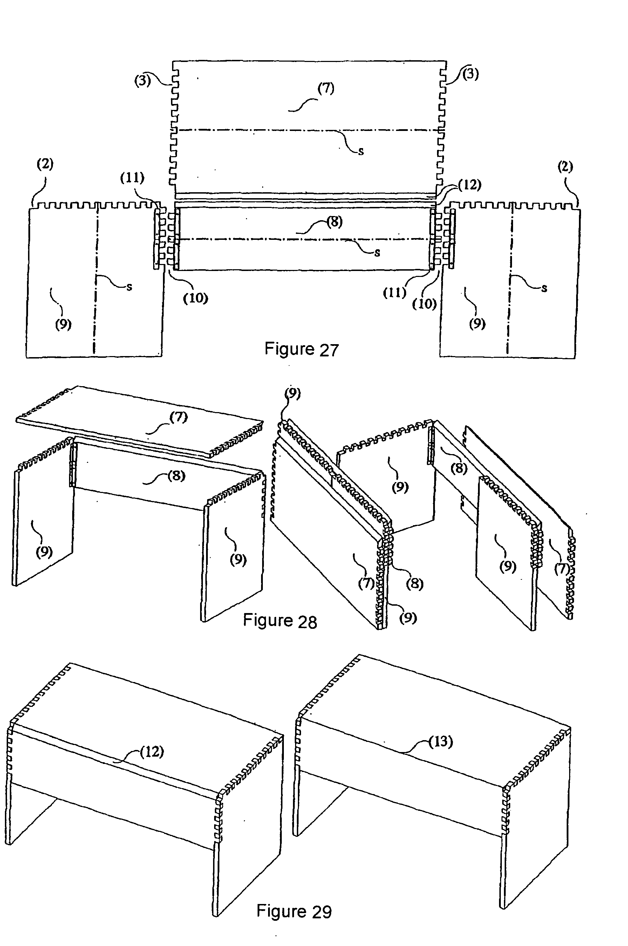

Fig. 26 is a plan view of a panel (1) with parts (2) and (3) of the assembly mechanism on the same panel, located symmetrically in relation to the (S) axis, an isometric view of a box constructed with two pairs of said panels, and a pair of panels (4) with parts (2) and (3) of the assembly mechanism on the same panel, a view of a form of coupling; and a cut-away view of the parts of the flush mortise and tenon- corner joint-type assembly mechanism.
Fig. 27 is a plan view of an array of panels which have measurements where there are modular measurement ratios such as those on the panels of Fig. 12, and where a part of an assembly mechanism, complementary to one another, is manufactured, said parallel parts being distributed on the same panel, as are parts (3) on panel (7); and said parts distributed contiguous on the same panel, like parts (2) and (10) on panel (9).
Fig. 28 is an isometric view of the panels of Fig. 27 where the form of coupling between said panels is described.
Fig 29 is an isometric view of the panels of Fig. 27 where the rigid box they form is described, so that it results in a rigid box comprised of four panels with measurements and coupling capacity equivalent to those found in the panels of Fig. 12. The assembly mechanisms constructed on the panels adjacent to one another, construct rigid boxes by means of fixing panels joined in the intersection of three different planes.

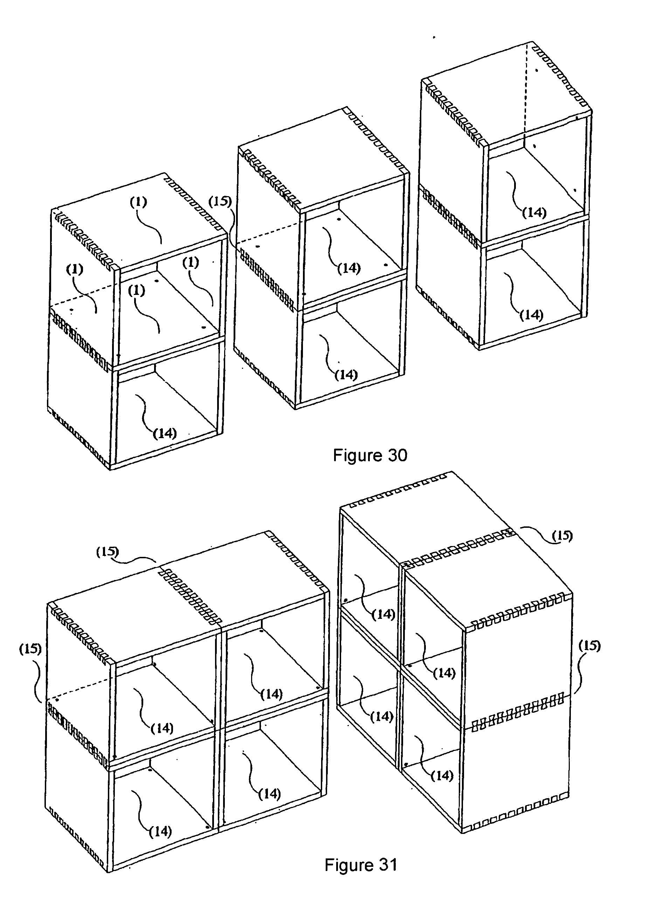

Fig. 30 is an isometric view of an arrangement of two rigid boxes (14) superimposed and flush with the edges, constructed with four panels (1) each one; one placed over the other asymmetrically between the boxes in contact, to the left of the figure; to the centre, in symmetrical position (15), obtained by a rotation of the upper box 180° on the horizontal plane; and asymmetric, at the right end, with a rotation of 90° on the vertical plane. The joint mechanisms drawn between one box and another, are conventional and are positioned as such on the panels which are compatible to couple with one another by rotations of the flush boxes in intervals of 90°.

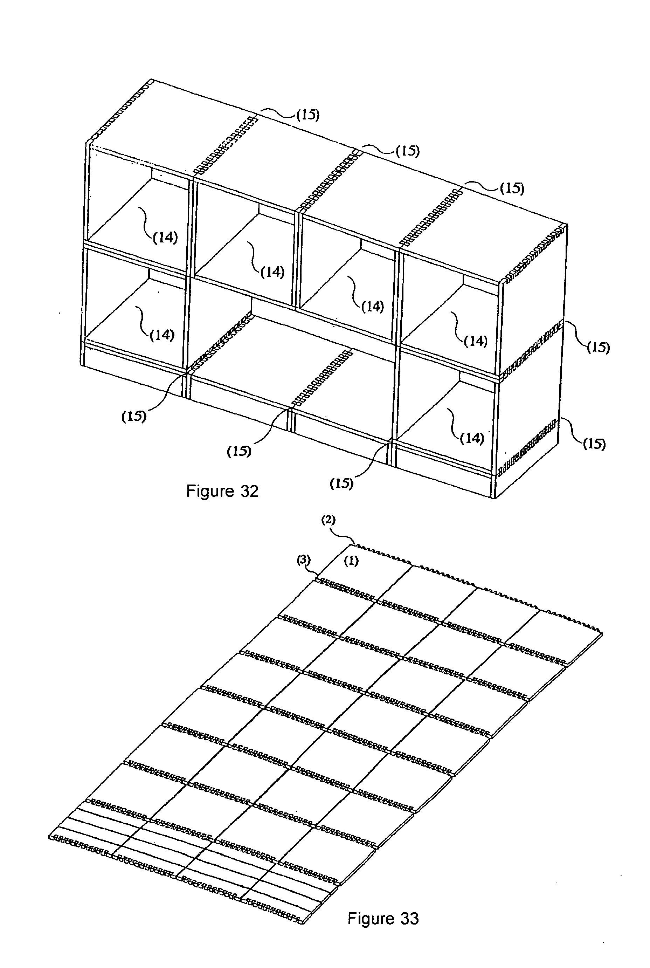

Fig. 31 is an isometric view of an arrangement of two arrays each comprised of two rigid boxes (14), flush and superimposed in symmetrical position (15); adjacent and flush with the edges, arranged symmetrically between the boxes in contact. The joint mechanisms drawn between one box and another are conventional and are positioned so that they are compatible with one another with rotations of the boxes in intervals of 180°.
Fig. 32 is an isometric view of a structure comprised of an arrangement of three arrays of two rigid boxes (14) each one, flush and superimposed in symmetric position (15); and by an array of four "base-boxes".

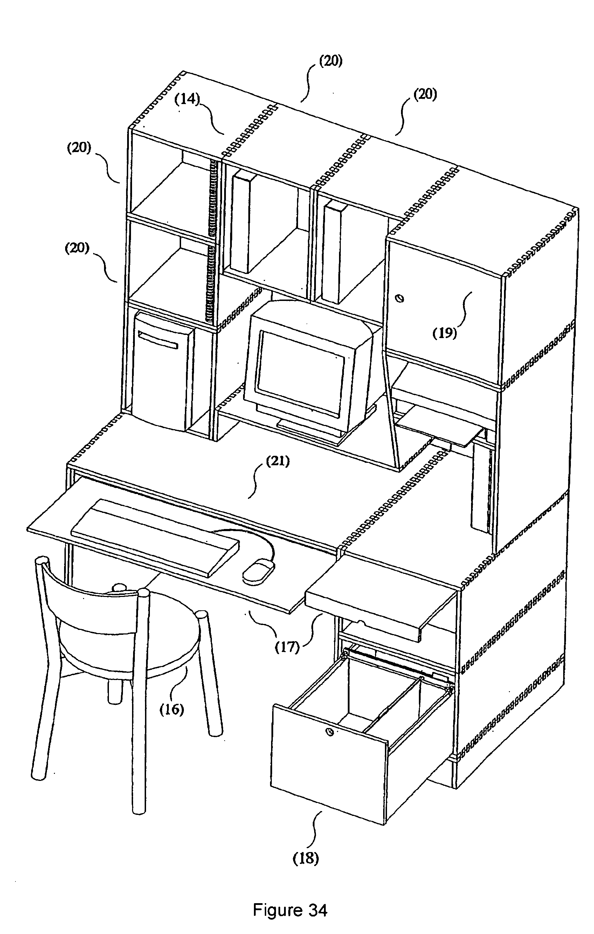

Fig. 33 is an isometric view of an array of panels (1) with which the structure drawn in Fig, 32 is constructed, the amount of panels used is equivalent to those obtained form a manufactured board whose sides have the proportion 1:2, standard in the trade; for example, a 1250 x 2500 mm board produces 32 panels (1) of 300 mm x 300 mm.

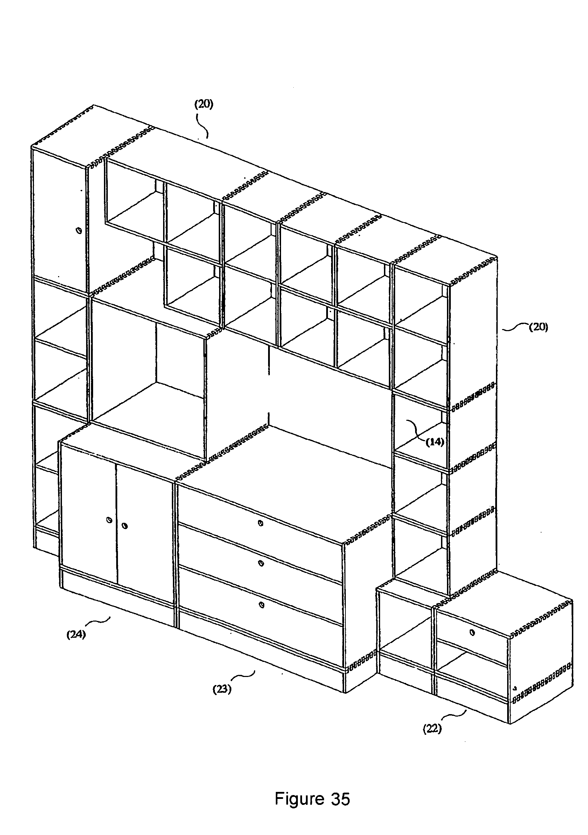

Fig. 34 is an isometric view of a structure made by the arrangement and fixing of rigid boxes of varied measurements, constructed with panels as is drawn in Fig. 12, whose measurements facilitate the storage of various objects. The arrangement is formed so that the array of boxes can be used as a work unit, related to the common chair (16) in the figure. The measurements of the series of panels that form the boxes makes the total measurement of the structure flexible to adjustments in length, height and depth, with a range of 'a' or 'b' units.
Fig. 35 is an isometric view of a structure made by the arrangement and fixing of rigid boxes of varied measurements, constructed with panels as is drawn in Fig. 12, whose measurements facilitate the storage of various objects. The arrangement is formed so that the array of boxes can be used as bedroom furniture, related to the common bedside table (22), in the figure.

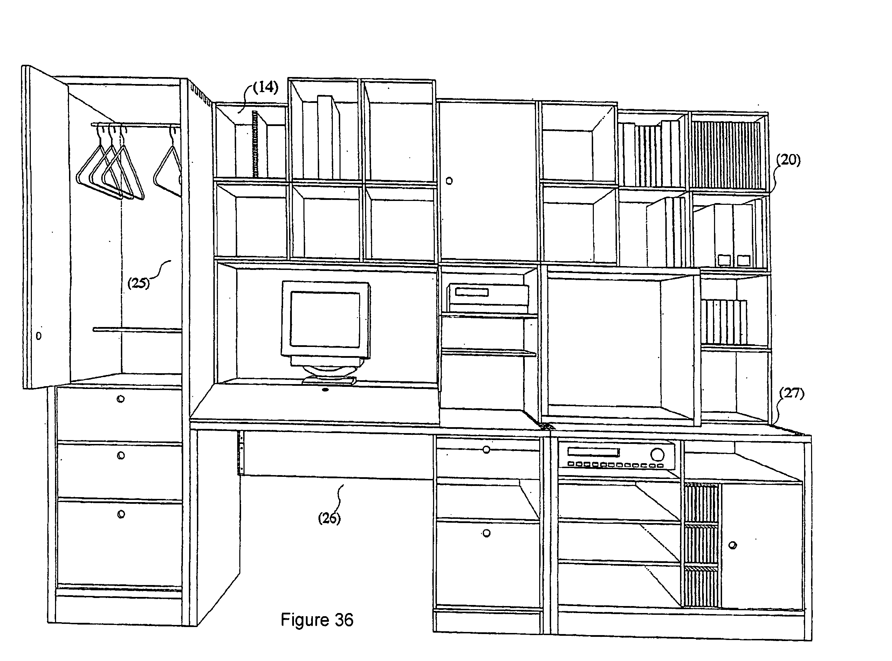

Fig. 36 is an isometric view of a structure made by the arrangement and fixing of rigid boxes of varied measurements, constructed with panels as is drawn in Fig. 12, whose measurements facilitate the storage of various objects. The arrangement is formed so that the array of boxes can be used as a multiple-use piece of furniture related to the closet (25), work unit (26), audio and video rack (27), and the bookcase (20) in the figure.

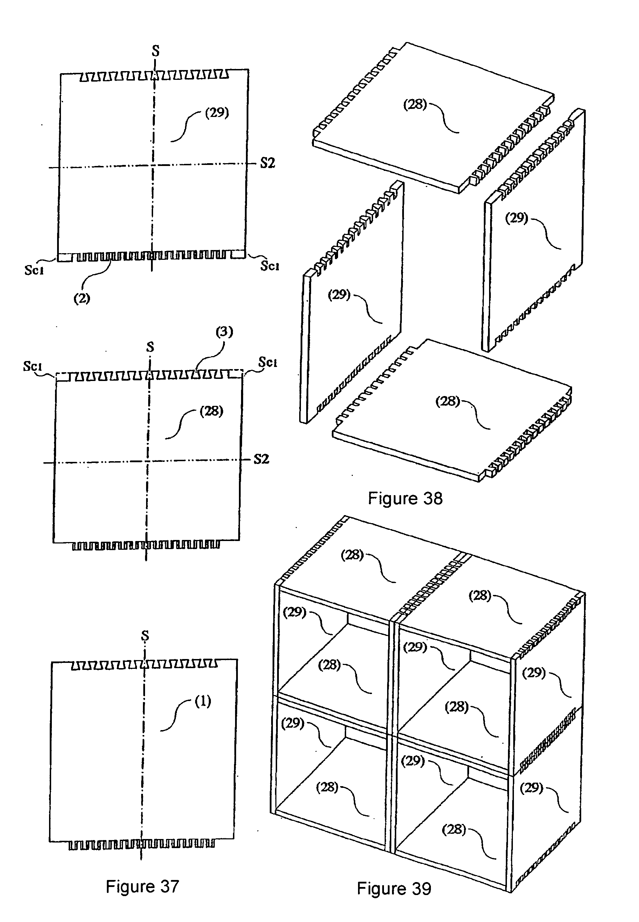

Fig. 37 is a plan view of an array of panels (1), modified to (28) and (29), to construct boxes containing an array of flush drawers, produced by the application of the present production system.
Fig. 38 is an isometric view of panels (28) and (29), wherein the capacity for coupling between them remains intact.

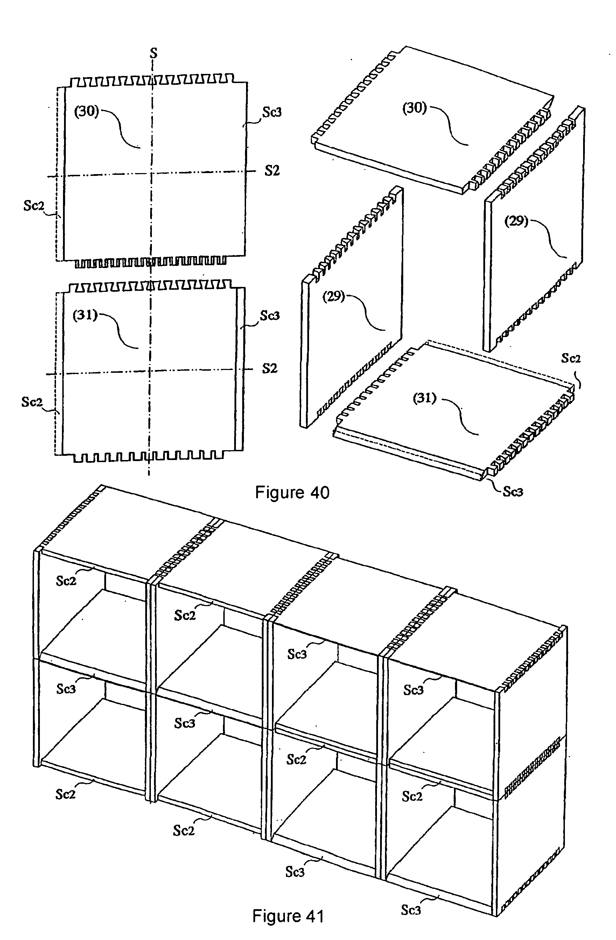

Fig. 39 is an isometric view of a structure made by the arrangement and fixing of four rigid boxes constructed with panels (28) and (29), ordered symmetrically between one another, where the edges of the panels drawn in the vertical plane of the figure are adjacent.
Fig. 40 is a plan view of panels (30) and (31), modified from (28) with inlays of section Sc2 and Sc3, which maintain the capacity for coupling with panels (29), to construct a rigid box which is structurally, dimensionally and functionally symmetrical at rotations thereof by 180° on the vertical plane and 180° on the horizontal plane.
Fig. 41 is an isometric view of a structure composed by the arrangement and fixing of four arrays of two rigid boxes constructed with panels (29), (30) and (31); combined with one another as is possible with said unit rotated in intervals of 180° on the horizontal and vertical plane, maintaining symmetry in the arrangement of the boxes, where it is possible to identify the flush plane of profiles Sc2 and Sc3.

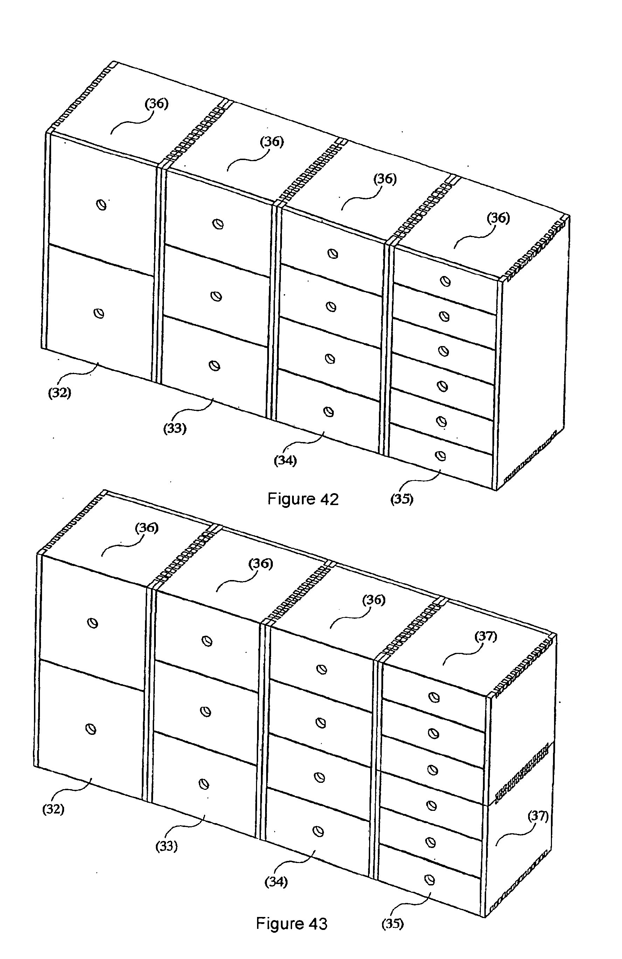

Fig. 42 is an isometric view of a structure comprised of the arrangement and fixing of four rigid boxes (36), constructed with panels (30), (31) and a panel equivalent to (29), differentiated by the length of the side without the assembly mechanism being double the measurement of said side of panel (29), containing two drawers (32), three drawers (33), four drawers (34) and six drawers (35); the edges of the front of the drawer flush with the edges of the boxes (36).
Fig. 43 is an isometric view of a structure comprised of the arrangement and fixing of three rigid boxes (36), each of them rotated 180° on the vertical plane in relation to Fig. 42, containing two drawers (32), three drawers (33), four drawers (34) and six drawers (35); contained in two equal boxes (37); the edges of the front of the drawer flush with the edges of boxes (36) and (37).

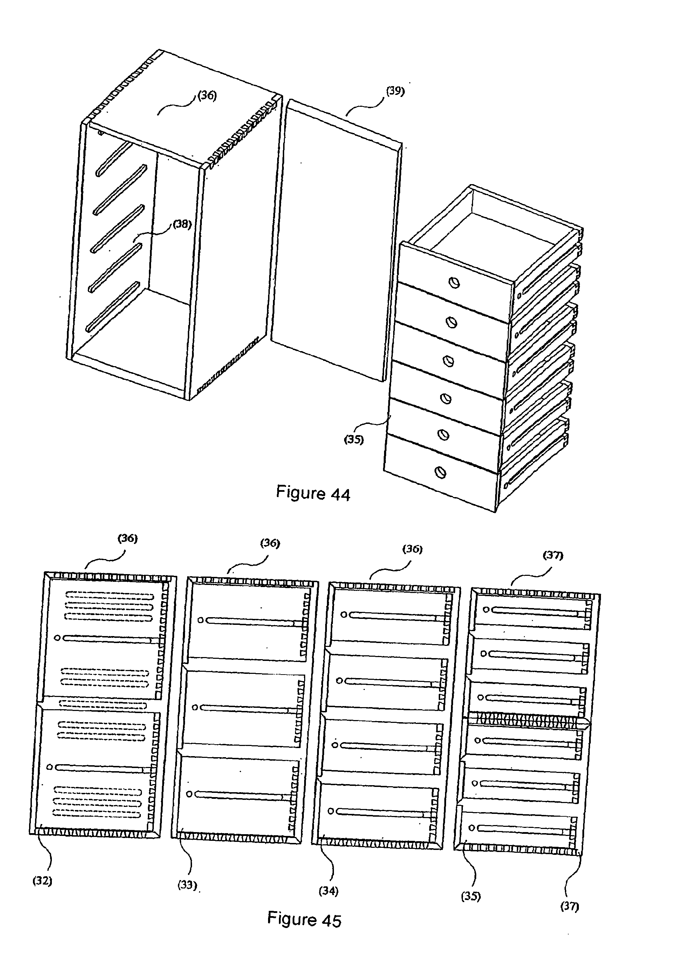

Fig. 44 is an isometric view of a box (36) which identifies the mechanisms (38) to support and transfer the drawers (35), arranged within the box so that they are symmetrical at rotations of the box by 180° on the vertical and horizontal plane, a rear board (39) and the array of six drawers (35).
Fig. 45 is a side elevation view of an array of three boxes (36) and two boxes (37), containing drawers (32), (33), (34) and (35); and the projection in a single plane, at the left side of the figure, of the location of the mechanisms (38) corresponding to each one of said boxes, drawn with dashed line.
Fig. 46 is an isometric view of the panels which build a box type, in the example a drawer (34), formed by a front drawer panel (40), two side panels (41) and (42), a rear drawer panel (43), and a base drawer panel (44). The panels have an assembly mechanism (46) compatible with the base panel of the drawer (44); panel (40) has a part (49) of the assembly mechanism with panels (41) and (42) compatible with the mechanism (48) and a pulling mechanism (47). The panel (41) and (42) has a mechanism (49) compatible with the mechanism (38); and a part (3) of a mechanism compatible with part (2) positioned on the edge of panel (43).

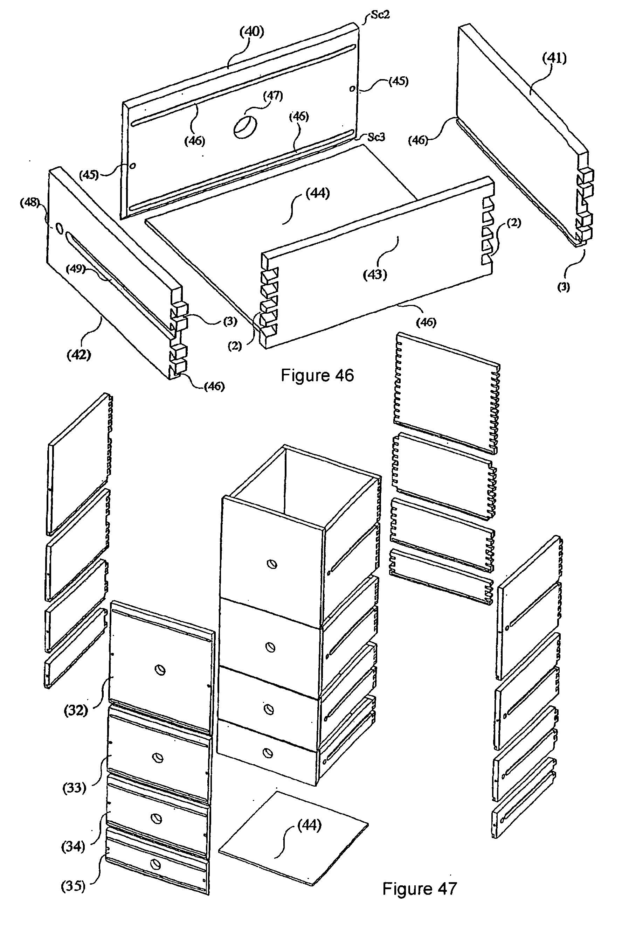

Fig. 47 is an isometric view of the panels which form drawers (32), (33), (34) and (35), where we can identify the assembly mechanism of each panel, and how they adapt to the measurements of the panel, on the vertical plane of the drawing, maintaining the distance between the edges of the panels and the assembly mechanisms constant.

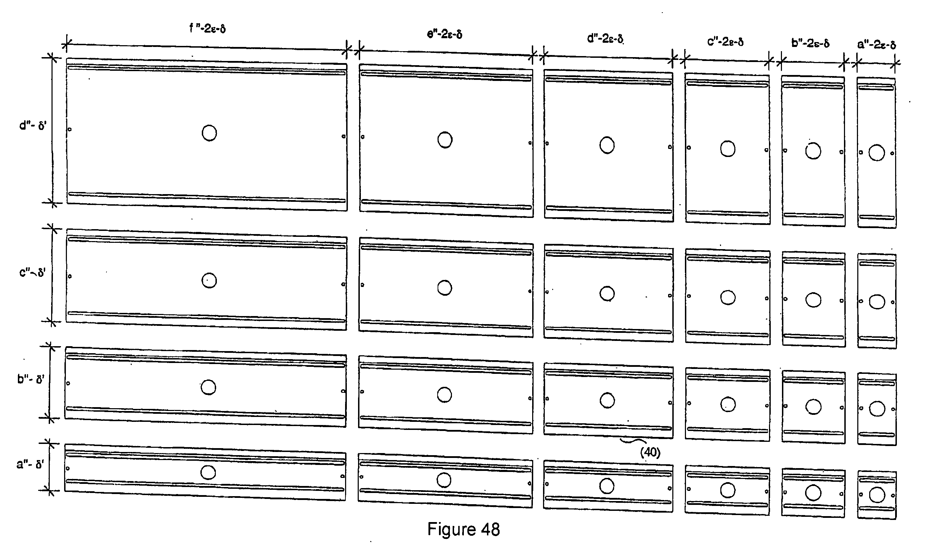

Fig. 48 is a plan view of an array of front drawer panels to produce drawers, for containers constructed from panels equivalent to those of Fig. 12, formed by six series of panels which have modular measurements on the side of the panel without assembly mechanisms (46), in common with the measurement of that side of the panel, where the distance between the edges of said mechanism and the edges of the front drawer panel (40) of drawers (32), (33), and (35) are kept constant, the same with respect to mechanisms (45) and (47) in each one of said drawers.

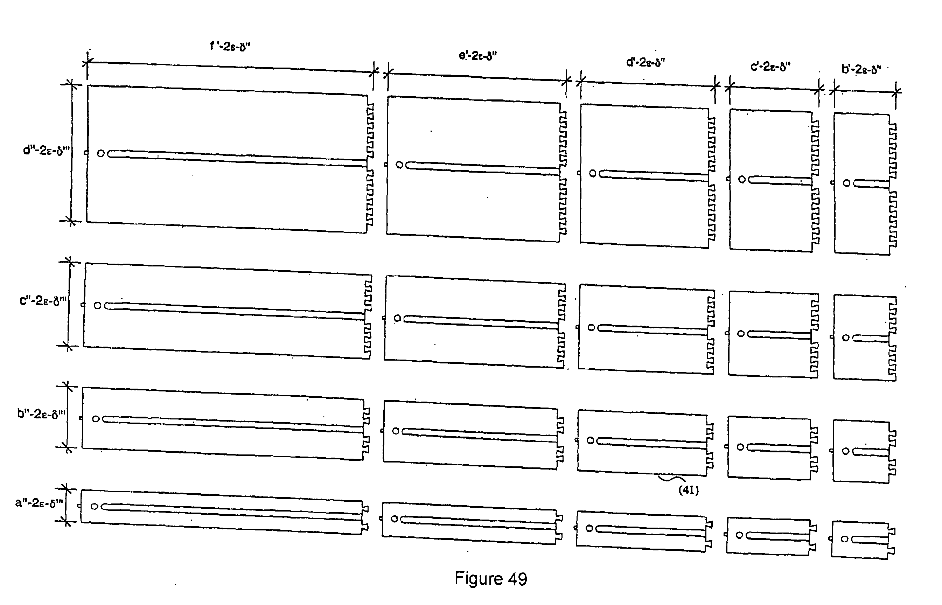

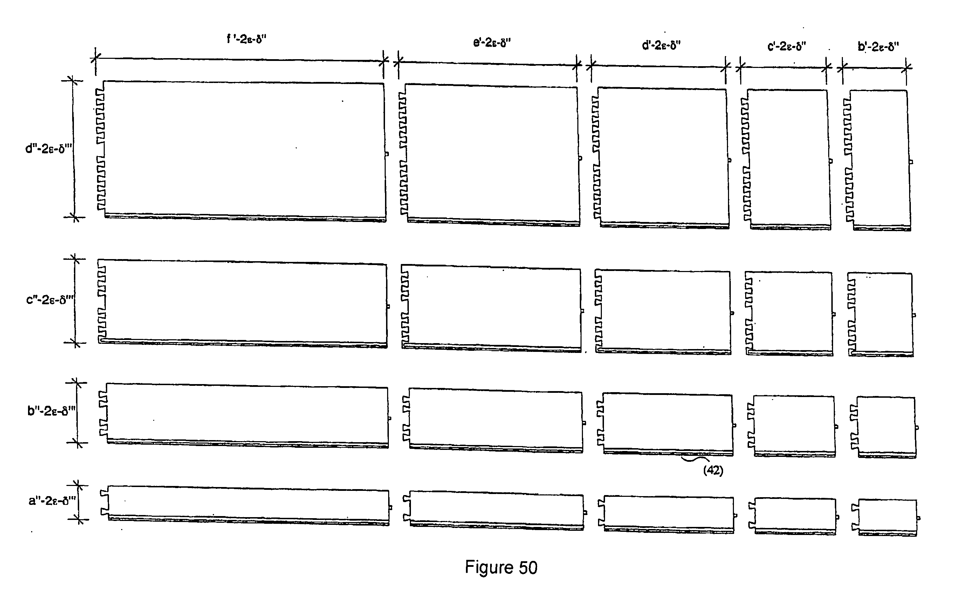

Fig. 49 and Fig. 50 are a plan view of an array of side drawer panels to produce drawers, for containers constructed with panels equivalent to those of Fig. 12, formed by four series of panels which have modular measurements on the sides of the panel without the assembly mechanisms (43) and (3), in common with the measurements of that side of the panel; where the distance is maintained constant between the edges of said mechanism and the edges of the side panel of the drawer (41), of drawers (32), (33), (34), and (35), the same in relation to mechanism (46) and (49).

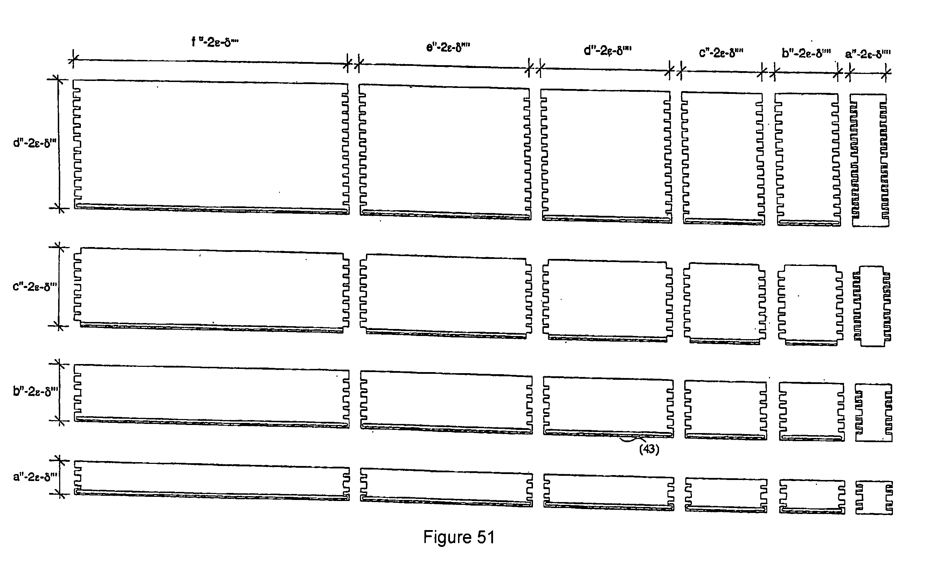

Fig. 51 is a plan view of an array of rear drawer panels to produce drawers, for containers constructed with panels equivalent to those of Fig. 12, formed by four series of panels which have modular measurements on the sides of the panel without the assembly mechanism (2), in common with the measurement of that side of the panel; where the distance is maintained constant between the edges of said mechanism and the edges of the rear drawer panel (34), of drawers (32), (33), (34), and (35), the same in relation to mechanism (46).

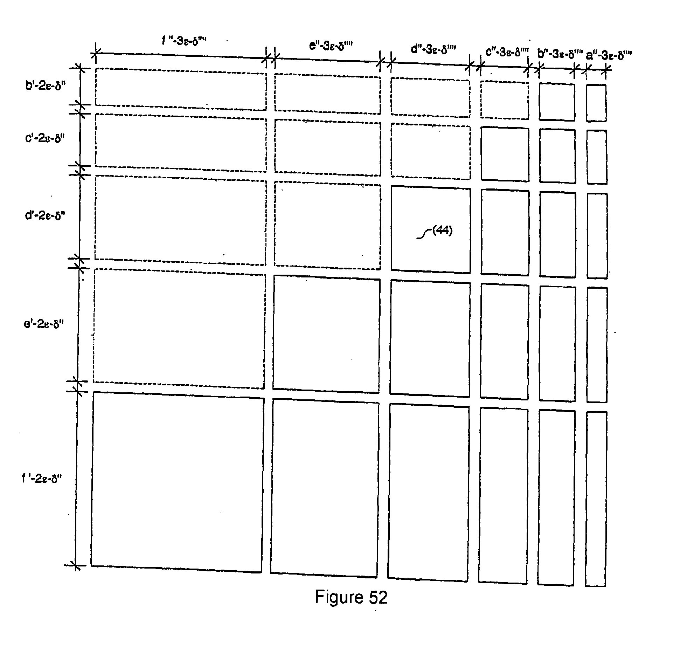

Fig. 52 is a plan view of an array of base drawer panels, for containers constructed with panels equivalent to those of Fig. 12, formed by all the panels that are defined by being an area compatible with the shape and measurements of mechanism (46), produced as a result of coupling all the combinations of the panels which have the measurements of the side of the panel in common with the assembly mechanism (2) and (3), of Figs, 49, 50 and 51.

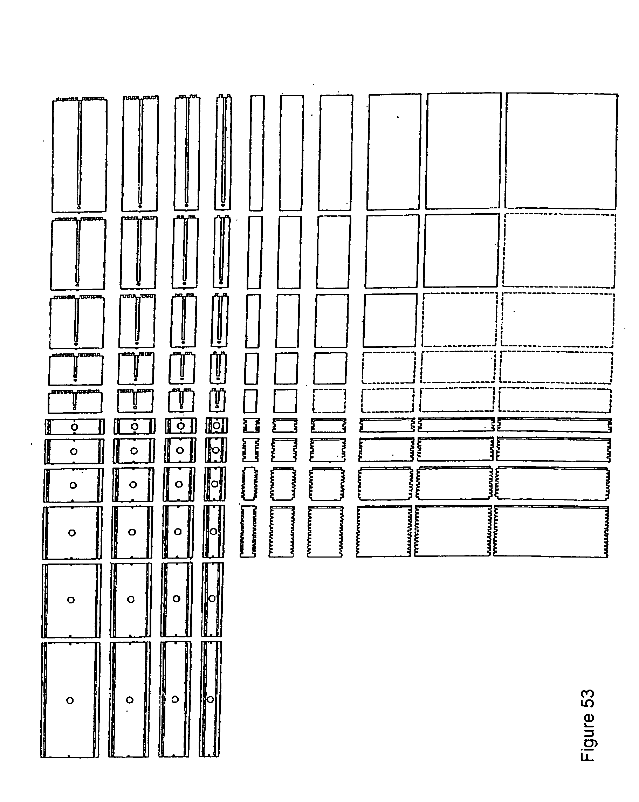

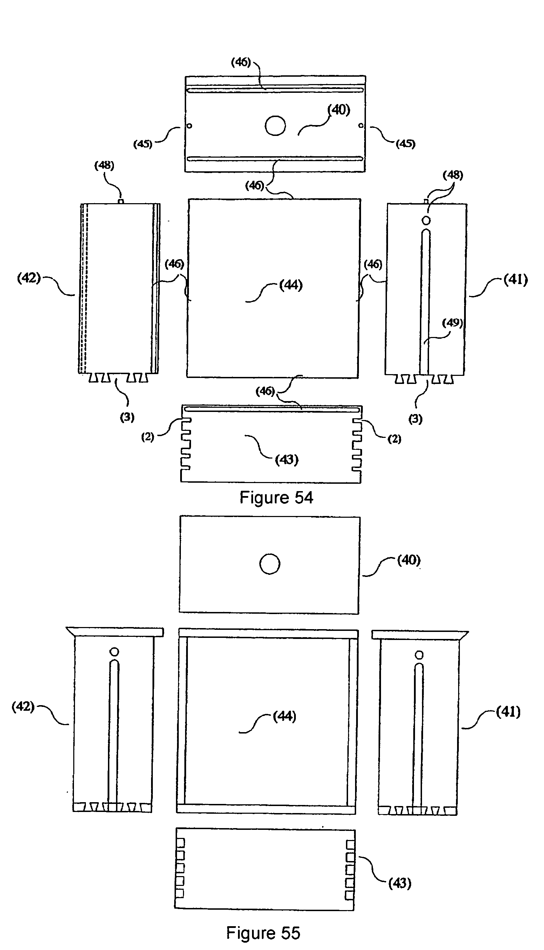

Fig. 53 is a plan view of the array of panels described in Figs, 48, 49, 50, 51 and 52, having synthetized in a single panel the side panels of Figs, 49 and 50, as indicated with dotted line in the drawing of panel (42) in Fig. 54. So that with this array of 98 panels it is possible to satisfy production requirements of 120 different drawers with a choice range of six different lengths of drawer front, four heights and five depths; being able to reduce the total quantity of panels by ten units to produce the same yield of drawers, which occurs when the measurements of the drawer bases generate panels whose sides correspond to square geometric patterns.
Fig. 54 is a plan view of the panels which form the drawer (34), where it identifies the coupling mechanisms compatible between one panel and another, the panels in the drawing are arranged so that the parts of the assembly mechanisms (48) which connect with the base drawer panel (44) are found.
Fig. 55 is a plan, elevation and profile view of the drawer (34), where it is possible to distinguish the individualized panels in Fig. 54 assembled with their pairs to form the drawer (34).

### Detailed description of the Invention.

The array of modular measurements is comprised of a modular measurement unit and by different modular measurement units which are the product of adding the value of said modular unit in successive quantities. Said modular measurements are defined by a process which uses geometric patterns as an instrument to determine the measurements of the modular unit and the related modular measurements.

Next, we describe the process to construct an instrument to define a modular measurement unit and different modular measurement units by setting measurement ratios, which we will call geometric pattern matrix, as is drawn in Fig. 1. Said matrix is a geometric representation of an array of measurements "a", "b", "c", "d", "e", "f", etc. Said measurements are reproduced on the sides of the square figures, which we will call square geometric patterns, each one of said patterns is reproduced and arranged contiguously, forming columns comprised of identical square geometric patterns, whose perimeter edge describes a rectangular shape, whose longest side is equal from one column to another, to which we will assign a value called "Z". Said columns are grouped adjacently, so that the perimeter edge of the array of columns describes a rectangular or square shape.

We will assign the value "a" to the measurements of the shortest side of the geometric patterns of the array, so that a=Z/n, where "n" is an even Whole Number greater than two. We will assign value "b" to the shortest length of the side of the square of the array of measurements, with the exclusion of "a", so that b=Z/m, where "m" is an even Whole Number different from "n", from where it results that an=bm=Z.

We will assign value "c" to a measurement equal to "2a", so that c=2a=2Z/n=Z/n/2; value "d" to a measurement equal to "2b" so that d=2b=2Z/m=Z/m/2; value "e" to a measurement equal to "2c", therefore equal to "4a", so that e=4a=4Z/n=Z/n/4; value "f" to a measurement equal to "2d", therefore equal to "4b:", so that f=4b=4Z/m=Z/m/4; and thus successively until defining the last element of the series whose value is equal to "Z/2".

Defined in the way described, the measurements with values different to "a" and "b" are comprised of components of series formed by measurements which are duplications of the value of the previous component; i.e. an array of measurements which are even multiples of each one of the measurements "a" and "b", equal to "2a", "4a", "8a", etc; and "2b", "4b", "8b", etc, respectively. The difference between the value of one measurement of the series and the next, of the same series, is equal to the measurement of each one of them, i.e. "2a", "4a", etc and "2b", "4b", etc. respectively.

To find a constant consecutive difference between the value of the measurements of the components of the series whose values are multiples of "a" and "b", one of those values "a" or "b" is used as auxiliary measurements; making the value of one of its duplications equal to a measurement which is a multiple quantity of the other. For example, to find a series of consecutive measurements with a constant difference of "a" units, it is necessary to find a measurement whose value is equivalent to "3a" units, so that the series is comprised of the values "a", "2a", "3a", and "4a".

For this, the matrix of Fig 1 identifies the column which is between the columns comprised of the geometric patterns whose sides have measurements immediately higher and lower than the desired measurement; in this case, between "2a" and "4a" units, i.e. the column comprised of the geometric patterns whose side has a measurement equal to "2b" units; and the desired measurement is equalled with that which is found in the corresponding place; so that in this case, it makes "3a" equal to "2b"; replacing "a" for "Z/n" and "b" for "Z/m", given that a=Z/n and b=Z/m; from which it results than 3Z/n=2Z/m, with which the ratio n:m=3:2 is produced.

Therefore, in the matrix of Fig. 1, the measurement ratios are defined as 12a=8b=6c=4d=3e=2f=Z; so that f=6a=4b; e=4a; d=3a=2b; and c=2a; with which we manage to create a series of four modular measurements whose values are equivalent to "a", "2a", "3a" and "4a" units, with a constant, consecutive difference of "a" units between them, as can be distinguished in Fig. 2, or a series of three modular measurements whose values are equivalent to "2a", "4a" and "6a" units, with a constant, consecutive difference equivalent to the measurement "2a" among others.

In this case, together with defining the series of measurements associated to module "a", we generate a series of measurements associated to module "b", comprised of values equivalent to "b", "2b" and "4b" units, series that can be made consecutive by finding a measurement equivalent to "3b" units. In the matrix of Fig. 1, it can be established that the column corresponding to patterns with measurement equal to "3b" units is the column with the shortest side equal to "e" units, with e=4a, it makes "3b" equal to "4a", from where we produce the ratio a:b=3:4. Therefore, in the matrix of Fig. 1, there is no ratio between "n" and "m" which simultaneously gives rise to a value equivalent to "3a" and "3b" units; and therefore the auxiliary measurement of "b" to find "3b" is different to the measurement "a".

To find said auxiliary measurement, we construct, using the same process, another matrix, as appears in Fig. 3 where one of the modules is the measurement "b", and the value of the auxiliary module whose measurement is so that one of its duplications corresponds to a value equivalent to "3b" units is unknown, a module which we will call "g". We will call Z' the value of the measurement of the longest side of the column that contains the square geometric patterns of this new matrix, whose measurements we will call "g", "b", "h", "d" and "i".

We know that g:b=3:4, and that 3a=2b, as has been established in the matrix of Fig. 1, from which it results that a:b=2:3, and therefore 3a:3b=6:9, so that 9a=6b is the lowest value of Z', because it is the last component of the series, given that its value is 6b/2=3b, which corresponds to the desired value. Then, the value of Z' is defined in relation to module "a", given that Z'=9a; and in relation to module "b" given that Z'=6b; therefore one of the whole numbers which divides Z' is 6, and the value of the other whole number which divides Z', and gives rise to the auxiliary measurement "g", will be between 6 and 9, for which reason it should be equal to 8; given that, by definition, it is a whole even number; as can be appreciated in Fig. 4. So that the value of the auxiliary measurement "g" is in relation to the value of the modular measurement "b" as g:b=3:4; and one obtains a series comprised of measurements whose values are "b", "2b", "3b", "4b" and "6b" units; and a series comprised of measurements whose values are "a", "3a" and "9a" units. So that we can achieve simultaneously a series of measurement units, multiples of the measurement "a", equal to "2a", "3a", 4a", "6a" and "9a"; and a series of measurement units, multiples of the measurement "b", equal to "2b", "3b", 4b" and "6b"; the ratio Z:Z'=4:3 between the measurements "Z" and Z' ".

Once the modular measurement ratios have been defined between any generic matrix and, with this, the modular measurement unit and the sequence of associated modular measurement units, we combine the measurements of the side of the square geometric patterns of said matrix to produce rectangular geometric patterns, such as those in Fig. 5, produced from the matrix of Fig. 1 by the projection of each one of the measurements with all the others.

Said projection is made by the adjacent arrangement of each one of the square geometric patterns defined in the matrix of Fig. 1 by the vertices, so that the diagonal of each one thereof is aligned with the others. Once located in the position described, we copy the layouts of their sides and move to a distance equal to the measurement of each one of the sides of the other geometric patterns, with which one manages to delimit the rectangular patterns; arranged in columns or rows, comprised of a series of geometric patterns characterized in that they have a side whose measurement is common to all of them and a side whose measurement is modular between them; which can be distinguished with a horizontal or vertical reading of the figure.

Given that the measurements of the sides of any of the rectangular patterns drawn in Fig. 5 are one of the measurements of the sides of the square patterns of Fig. 1 and given that said measurements correspond to whole divisions of the measurement "Z", it then occurs that any of the sides of any of the rectangular patterns of Fig. 5 will always be a measurement which is a whole fraction of the measurement "Z". Therefore, it is always possible to find an arrangement of repetitions of any pattern of Fig 5 which describes a square perimeter edge with side equal to "Z" units; as can be appreciated in Fig. 6 for any square geometric pattern, and in Fig. 7 for any rectangular geometric pattern; contained in the square area of side equal to "Z" units, drawn with a dotted line. The example drawn in Fig. 7 is a series of geometric patterns of a common side equal to "d" units.

Thus, a square area with sides equal to "Z" units is defined, divisible in equal parts, parts which are square and rectangular geometric patterns of Fig. 5, and said division made by the cutting of said area through the layouts parallel and perpendicular to the edges of the sides of said square inside said square area, drawn with dotted line in Fig. 6 and 7.

The fixing of the measurements of the geometric patterns is basically conditioned by three considerations. One relates to the definition of the range of constant flexibility between the measurements to configure measurements other than those available, a range that is equal to the value of the measurement of the modular unit, or module. Another relates to the intended use of the panels; for example, to use measurements whose lengths are familiar for the users; for reasons of commercial nature, for example; or for reasons related to the capacity of containing objects associated with the typical use of the pieces of furniture. The other consideration relates to the means of manufacturing the panels, limiting the measurement lengths of the sides to the capacity of the equipment which is used to make them and to the standardized format of the manufactured board starting material.

In any case, by using manufactured boards as a starting material to manufacture panels with modular measurements, it is possible to make maximum use of the material of the rectangular area described by a perimeter equivalent to an arrangement comprised of units equal to each one of the different panels, and to optimize the usage of the board material, making the lengths of the measurements of the panels maximum in relation to the lengths of the board sides.

We will assign measurements "L" and "M" to the length of the sides of a standard board, and the measurement "ε" to its thickness. To manufacture panels whose area optimizes the usage of materials from a standard board, we should equal any of the measurements of sides "L" or "M" with the measurement with side "Z" of a generic matrix such as that defined in Fig. 1. In this way, the material wastage in the cut-outs thereof which is made by the side of the board aligned with the matrix is cancelled out; because at least one of the measurements, of the panel sides is a whole fraction of the measurement of one of the sides of said board.

Fig. 8 is a plan drawing of a standard manufactured board with sides "L" by "M", a generic matrix as is defined in Fig. 1, with side "Z"; and a matrix we will call side "L", which is the result of multiplying the measurement of one of the sides of the geometric patterns defined in the matrix with side "Z" by a factor we will call "X", so that "X=L/Z", transforming into "f' ", one of the "f" sides of the geometric pattern of sides "f" by "f", so that f'=fX, e'=eX, d'=dX, c'=cX, b'=bX and a'=aX. Thus, the matrix with side "L" maintains the modular measurement ratios between the geometric patterns defined in the matrix with side "Z", and we can optimize the usage of the material of the board with sides "L" by "M" by the side "L", because any panel which has the measurement a', b', c', d', e', or f' on one of their sides can be manufactured by aligning on side "L" of said board, without producing material wastage.

Fig. 9 is a plan drawing of a standard manufactured board with sides "L" by "M", a generic matrix as is defined in Fig. 1, with side "Z"; and a matrix we will call side "M", which is the result of multiplying the measurement of one of the sides of the geometric patterns defined in the matrix with side "Z" by a factor we will call "Y", so that "Y=M/Z", transforming into "f" ", one of the "f" sides of the geometric pattern of sides "f" by "f", so that f"=fY, e"=eY, d"=dY, c"=cY, b"=bY and a"=aY. Thus, the matrix with side "M" maintains the modular measurement ratios between the geometric patterns defined in the matrix with side "Z", and we can optimize the usage of the material of the board with sides "L" by "M" by the side "M", because any panel which has the measurement a", b", c", d", e", or f" on one of their sides can be manufactured by aligning on side "M" of said board, without producing material wastage.

Fig. 10 shows a drawing of a generic matrix as defined in Fig. 1, with side "Z", the matrix with side "L", which is the result of multiplying the measurement of one of the sides of the patterns defined in the matrix with side "Z" by factor "X", already defined; and a matrix which we will call "LM", which is the result of multiplying the measurement of the non-multiplied side of the patterns obtained from the matrix with side "L" by factor "Y", so that Y=M/Z, transforming in "f" ", side "f" of the geometric pattern of sides "f' " by "f', so that geometric patterns are produced of sides "f' " by "f" ", "e' " by "e" ", "d' "by d" ", "c' " by "c" ", "b' " by "b" " and "a' " by "a" ". In this way, the "LM" matrix maintains the modular measurement ratio between the geometric patterns defined in the matrix with side "Z", and we can optimize the usage of the material of the boards with sides "L" by "M" by the side "L" and the side "M", because any panel where one of the measurements a', b', c', d', e', or f' is found on one of the sides and a measurement a", b", c", d", e" or f" on the other side, can be manufactured without producing material wastage as appears in figure 11.

The upper part of figure 11 shows a drawing of a matrix comprised of geometric patterns produced as a result of combining the measurements of the patterns defined in the matrix called "LM". The lower part of the figure shows a drawing of a generic board with sides "L" by "M", delimited with dotted line, the layout of the cut-out lines of the panels which have the form and measurements of the shaded patterns in the drawings; corresponding to panels whose measurements are f"xf', e"xe', d"xd', c"xc', b"xb', and a"xa'; and to a series of panels with measurement "d' " on one of its sides and modular measurements on the other, whose measurements are d'xf", d'xe", d'xd", d'xc", d'xb" and d'xa". In this way it can be verified that any of said panels is a whole fraction of a board with sides "L" by "M".

If we choose to adapt the measurements of the panels to specific requirements, we proceed in the same manner, multiplying the geometric patterns defined in a matrix with side "Z" by the factors "X" and "Y", where "X" and "Y" will be values which satisfy said requirement. In this case, the concordance of the measurements "L" and "M" of any board with the value "XZ" or YZ" will be random, and therefore the possible material wastage will be unpredictable, unless one custom makes boards for said requirement.

Once the modular measurement ratios have been defined and the length of said measurement ratios have been determined, series of panels are produced such as those shown in plan view in Fig. 12, characterized in that at least one of their sides has a measurement common to all of them and a modular measurement on at least one of its sides different to that which possesses said common measurement.

The panels drawn in Fig. 12 correspond to a model constructed by the use of a manufactured board with sides "L" by "M" and thickness "ε" with proportion between "L" and "M" of L:M=1:2, standard in the industry of the field. Said measurement ratio means that a=a'=a", b=b'=b", c=c'=c", d=d'=d", e=e'=e", and f=f'=f". In the drawing, the area of the panels used to house assembly mechanisms is drawn with a dashed line. In each series of panels, said area is located at a constant distance from the edges of said panel and includes an area delimited by the length of the panel side where we find the assembly means and by the length of the measurement of the panel thickness "ε".

The assembly mechanisms are comprised of two complementary parts (2) and (3), able to couple together so that they manage to fix the joint of two independent panels. We note that the measurement "d" is found on panels (1) and (4), sides of the panels where an assembly mechanism (2) and (3) is found, and the modular measurements "d" and "e" on the sides perpendicular to the side of measurement "d". Said characteristic is found in the series of panels which have the measurement "d" on at least one of its sides; and on each one of a series of panels which have the length of one of its sides in common.

Fig. 13 is a plan view of all the panels of Fig. 12 ordered in columns whose longest side is equal from one column to another, flush with one of the edges of one of the panel sides without the assembly mechanism; thus ordered, it is possible to see the constant measurement difference between each one thereof equal to "a" and "b" units, corresponding to the adjustment margins of the measurements available to choose the base measurement of a piece of furniture; something which also happens with the measurements of the panel sides, corresponding to those used to find the front and height measurements of a piece of furniture, reflected in the capacity to compose an unavailable measurement by the addition of the available ones, and the constant difference between the panel edges and the assembly mechanisms edges.

The fact that all the panels of a series have a complementary assembly mechanism, common to all of them, produces the advantage noted in Fig. 14, where it shows a drawing, in front elevation view, of the individualization of all the combinations between two pairs of panels comprising a series of panels of common side and complementary assembly mechanism, of any of the series drawn in Fig. 12. The coupling of the different panels through the same assembly mechanism multiplies exponentially the capacity for combination between them, so that with an array of "N" different panels, we obtain a variety of N2 rigid arrangements, comprised of two pairs of panels each, of which N(N+1)/2 are different from one another.

So that with the panels of any of the series drawn horizontally in Fig. 12. comprised of six panels each, it is possible to make combinations of pairs thereof which permit the construction of 36 units; where 21 of them are different from one another. In the figure, the framework associated with the modular measurement "a" is drawn with a continuous line, and projections of the modular measurement ratios present on the sides of the panels the framework associated to module "b" with the dotted line.

The square boxes located on the diagonal of Fig. 14 are drawn in front elevation view of Fig. 15, arranged so that they recreate the geometry of the matrix of Figure 1, which gives rise to its form. Said geometry is drawn on the perimeter edge of the arrangement and the lines which describe the adherence of some boxes with others. The capacity to recreate the measurement ratios of the panels in arrangements made from boxes constructed with them, permits producing measurement 'L' by the addition of boxes with different measurements, with a range of precision in the production of a measurement less than 'L', by adding said measurements, equal to 'a' or 'b' units, as shown in the shaded drawing of the modular grid of measurement 'a' in the boxes on the upper side of the figure, and the modular grid of measurement 'b' in the boxes on the lower side of the figure.

This also occurs with the geometry of the matrix of Figs. 3 and 4, as shown in Fig. 16. The models drawn in Fig. 15 and 16 are constructed with panels of the same thickness "ε", and the measurement ratio between them is in the proportion ε:a=:8; specific case in which a substitute of modular measurement is produced for the requirement to compose length "e", equivalent to "4a" units, in three equal parts; because we have 3(b-2ε)=4a-2ε.

The recreation of the geometry of the matrix which gives rise to the panels with which the boxes which permit reforming it are constructed, is achieved by the use of assembly mechanisms which connect the panels with corner joints, so that the length of the panel side without the assembly mechanism extends to the edge of the box, as in the panels drawn in Fig. 12; and this is also achieved when the assembly mechanism between the panels is of the flush joint-type, as is shown in the example of Fig. 17, where panels are described, equivalent to those drawn in Fig. 12, differentiated by the measurement of the panel edge without the assembly means, where the thickness of the overlap present in the coupling mechanism, is subtracted from measurement of the panel edge, in this case equal to "ε" units, to produce the joint of two panels with flush edge joint.

Next, the construction system associated to the series of panels is described, resolved by the use of assembly mechanisms constructed on different panels, so that by means thereof, said panels are interchangeably coupled to one another. The location of the assembly mechanism in relation to the panel will be described by the use of a mortise and tenon-type mechanism model, constructed on opposite edges of panels which have the side measurement in common with the assembly mechanism, and which connects the panels with a corner joint.

Fig. 18 is a plan, elevation and profile drawing of a panel equivalent to that which is marked with number (1) in Fig. 12, whose sides have a measurement equal to "d" by "d" units, and possesses an assembly mechanism located on the sides of the panel whose measurement is "d" units, and is comprised of two complementary parts (2) and (3); each one of said parts is located symmetrically in relation to an (S) axis, perpendicular to the edge of the panel with the assembly mechanism, positioned at the midpoint of the panel with said assembly mechanism.

We will call male (2), the part of the assembly mechanism which enters in the complementary part, which we will call female (3). The male part and the female part of the assembly mechanism is comprised of mortise and tenon, which are repetitions of volumetric bodies, arranged in a straight rows, ordered with a frequency which consecutively alternates the full volume of a body and the empty volume of its complementary part.

The volumetric body which describes the form of the mortise and tenon of the panel of Fig. 18 is a straight rectangular parallelepiped. Said shape permits the perpendicular coupling of the male part of the assembly in the female part, with two degrees of freedom of movement; which also permits a hinge movement between 0° and 90° with a pivot axis position in the intersection of the assembled panels' planes which describe a 90° angle.

In this way, assemblies which have, in their coupling mechanisms, sections with repetitions of volumetric bodies like that described, constructed in panels like those drawn in Fig. 12, permit the construction of folding boxes, incorporating a hinge mechanism which regulates said movement in the assembled panels; or of rigid boxes, incorporating a mechanism which cancels out said movement, using a wedge-type fixing means, for example.

Fig 19 is a plan, elevation and profile drawing of a panel equivalent to that which appears in Fig. 18, where the shape of the volumetric body of the assembly mechanism has been modified, changing the straight rectangular parallelepiped to a rectangular truncated prism, which is achieved by modifying the value of the angle α located on the base of the isosceles prism which defines the shape of the volumetric body. When the value of said angle is α=90°, the isosceles prism is transformed into a rectangle or square, producing an assembly mechanism with two degrees of freedom of movement; when the value of said angle is α#90°, the shape of the isosceles prism is maintained, converting the form of the mortise and tenon in rectangular truncated prisms and, with this, cancel out one of the two degrees of freedom of movement. This type of mortise and tenon assembly is known as "dovetailed".

To construct to complementary parts of an assembly mechanism on opposite sides of the same panel has two important advantages. One relates to the economy of resources to construct a rigid box since, with four equal panels, it is possible to construct a square box. The other relates to the processes involved in the construction of a box.

The fact that the two complementary parts of a perpendicular assembly mechanism with one degree of freedom of movement are constructed on the same panel, creates the necessity to couple pairs of previously assembled panels to construct a close box comprised of four panels. Said conditions restrict the uncoupling of the panels once assembled because, for this, it is necessary to apply opposing forces on two different points of the box.

The detachment of a box panel thus assembled necessarily carries another one with it, and for this, it is necessary to exert a force that pushes from the inside of the box out, perpendicular to any panel and at a point which distributes it equally towards the contact area between one part of an assembly mechanism and its complement, joined with one degree of freedom of movement and, therefore, with potential displacement in a single direction.

Said point is located on the diagonal of the box, it is therefore necessary to separate the force and apply it simultaneously at two different points, located at the opposite ends of parallel panels, and in the opposite direction, which can be seen in Fig. 20. The drawing is an isometric view of a pair of panels (1) and a pair of panels (4), each one of them equipped with parts (2) and (3) of the assembly mechanism. In the upper part of the figure, there are two pairs of panels arranged in the position for coupling together; in the central part of the figure, two previously assembled parts arranged for their coupling; and the rigid box resulting from coupling two pairs of assembled panels.

The option to construct two equal parts of an assembly mechanism on the opposite edges of the same panel, is drawn in plan view in Fig. 21 where two series of panels derived from panels (1) and (4) is shown, A series (5) with the male (2) assembly mechanism constructed on two opposite sides of the same panel, and another series (6) with the female (3) assembly mechanism constructed on two opposite sides. This distribution of the assembly mechanism parts facilitates the form of coupling the panels when constructing a box, because it enables its termination without requiring pairs thereof to be previously assembled.

Said modification in the form of constructing a box, has the added cost of manufacturing an additional model for each panel in each series thereof, which result in duplicating the quantity of panels necessary to obtain the same variety of combinations between the panels of a series. This means that to obtain the same yield of 21 different models of boxes constructed with a series comprised of six different panels, twelve different panels must be manufactured.

The detachment of one box panel assembled with series of panels (5) and (6) does not carry another panel with it; and requires exerting a force that pushes from the inside of the box out, perpendicular to any panel (6) with female (3) assembly mechanisms, at a point which distributes it equally towards the contact area with the male mechanism (2), joined with one degree of freedom of movement and, therefore, with potential displacement in a single direction. That point is located on the panel, and therefore, at most, it is necessary to separate the force and apply it simultaneously at two different points positioned at opposite ends of the same panel, as can be deduced from Fig, 12, which shows the compared coupling sequence of parts (2) and (3) of the assembly mechanism in equal boxes, constructed with two pairs of panels (1) and (4) and constructed with two pairs of panels (5) and (6).

So that, using series of panels (5) and (6) means the resistance to detachment of an assembled panel in a box is opposed in a different way to that resulting from using panels (1) and (4). Nevertheless, the fact said detachment occurs is irrespective of the direction of application of a force which produces it, because, finally, the cause of adherence of the box panels is the pressure existing on the contact area between the assembly mechanism parts. Therefore, the way said parts are distributed on a panel or on different panels, affects the process to construct an equivalent structural rigid box, and affects the amount of resources necessary to obtain a variety of models of equivalent boxes.

Panels (1) and (4) drawn in isometric view in Figure 22 to Figure 26, are equivalent to the panels assigned with these numbers in Figure 12, therefore they have the same form and possess complementary assembly mechanisms (2) and (3) positioned on opposite edges of sides which have the same measurement. The panels of Fig. 22 have a flush joint assembly mechanism (2) and (3) of flush wedge corner joint, and prior coupling of a pair of them is necessary to construct a rigid box; as it is also necessary to do so with the panels drawn in the isometric view of Fig. 23, which have constructed the two complementary and equal parts, of a mitre and wedge corner joint assembly mechanism. The panels drawn in Fig. 24 have constructed a mitre and tongue corner joint assembly mechanism, those of Fig 25, a mortise and tenon corner joint assembly mechanism and those which appear in Fig. 26 of flush mortise and tenon corner joint.

The different assembly mechanisms used to solve the coupling of one panel with another, described in Figs. 22 to 26, affect the procedures involved in the process of constructing a rigid box, but do not alter the coupling capacity between the panels; an aptitude provided by the multiple coupling capacity of the assembly mechanisms constructed on the opposite edges of the sides with equal measurement; comprised of two complementary parts positioned symmetrically in relation to the "S" axis which is centred and perpendicular to the edge of the panel with the assembly mechanism.

Said multiple coupling capacity is maintained between the panels when the capacity to construct folding boxes is incorporated therein, because they are capacities independent from one another, as is found in the panels drawn in Fig. 27. The same part of the assembly mechanism (3) is constructed on opposite sides of panel (7), comprised of groups of trapezoid geometric bodies with one degree of freedom of movement, symmetrically aligned in relation to the 'S' axis, this being positioned perpendicular and at the mid point of the panel edge with the assembly mechanism; and a profile for scarf joint (12) complementary to the profile (12) of panel (8) for perpendicular coupling between both panels is constructed on the edge of one of the sides without the assembly mechanism.

On the edges of the opposite sides of panel (8), the same part of the assembly mechanism (10) is constructed, comprised of rectangular geometric bodies which couple with two degrees of freedom of movement, aligned symmetrically in relation to the 'S' axis; and the complementary part of the assembly (12) is constructed on the edge of one of the sides without the assembly mechanism, with coupling perpendicular to said part constructed on the edge of panel (7).

Part (2) of the assembly mechanism complementary to part (3) constructed on panel (7), is constructed on the edge of one side of panel (9); a complementary part to said part (10) of panel (8) is constructed on an edge contiguous to said part (2) of the mechanism. So that the coupling of panels (8) with (9) generates a hinge movement between said panels, regulated by the multiple coupling mechanisms (11).

Fig. 28 is an isometric view of the coupling of panels (7), (8) and (9), and the volumetric unfolding of the folding box constructed with said panels. Fig. 29 is an isometric view of the two versions of the rigid box constructed with the panels of Fig. 27. At the left of the figure, the version with beveled edge (12) finish and, at the right, with straight edge (13) finish. To obtain the latter, panel (7) is uncoupled and rotated 180° in relation to the vertical plane in the drawing; again fixing the assembly mechanisms.

The use of said panels produces a rigid box constructed with a predetermined construction means which consists of four panels with modular measurements and with compatible assembly mechanisms, which preserves the dimensional, combinational and constructive qualities of the panels with assembly mechanisms positioned only on the edges of opposite sides of the panels; where a different structural composition is found, it therefore couples four panels joined by five edges on three different planes, unlike the aforementioned which couples four panels joined by four edges on two different parallel and perpendicular planes.

The rigid boxes produced by the coupling of panels with the described assembly mechanisms and modular measurement ratios between the sides, is formed from rigid structure construction units. Said structures are comprised of arrays of rigid boxes flush with one of the edges, arranged together by their sides; and adhered by known connecting mechanisms, positioned to that they exert pressure on the contact area between one box and another which prevents its displacement, of five degrees of freedom of movement, with which we obtain a rigid joined structure; as can be appreciated in the isometric view of Fig. 30, where an array of two boxes (14) is drawn, constructed with four panels (1).

An array of two boxes flush with its edges has three arrangement options, equivalent from the structural, dimensional and functional point of view. At the left of Fig. 30, the superposition of two boxes is shown so that the panels in contact are arranged asymmetrically between them in relation to the line that draws the edges of the adhered boxes. In the centre of Fig. 30, the same arrangement is shown, differentiated by the position of the upper box of the array, which has been rotated 180° on the horizontal plane; with which symmetry (15) is produced between the panels in contact; we note that any rotation of said box by 180° intervals on the vertical plane, maintains said symmetry. The behaviour of said symmetry is also valid for rectangular boxes subjected to the same rotations on the horizontal and vertical plane. The right side of Fig. 30 shows the same arrangements of the left side, differentiated by the position of the upper box of the array, which has rotated 90° on the vertical plane; producing symmetry between the panels in contact; an option that is only possible with square boxes. The joint mechanisms drawn between one box and another, are conventional and positioned on the panels which are compatible to be coupled together by rotating the flush boxes by 90° intervals.

The connection mechanisms between the boxes, drawn in Fig. 31, are distributed on the panels so that they satisfy the coupling together of two boxes arranged symmetrically (15). The advantage that the latter form of connecting the boxes offers is the saving of half of the perforations on the panel: the possibility of using the same perforation to couple one box in a horizontal or vertical direction; and a guide to produce the symmetrical coupling of the boxes and, with this, a decorative expression of the resulting furniture structure. The joint mechanisms drawn between one box and another, are conventional and positioned so that they are compatible for 180° interval rotations of the boxes.

Fig. 32 is an isometric view of an arrangement comprised of three arrays of boxes (14) each, as drawn in Fig. 30; two vertical groups joined by a horizontal group, and four base-boxes, arranged symmetrically (15). Said group is constructed with the equivalent of 32 type (1) panels, obtained from a standard board with 1:2 proportion between its sides, like those drawn in the isometric view of Fig. 33.

Fig. 34 is an isometric view of a furniture structure comprised of an array of a plurality of different boxes whose measurements and structural characteristics enable organizing them so that the arrangement functions as a work unit, whose proportion relates to the box (14), to a common chair (16) and to the objects accommodated on different parts of the piece of furniture such as a computer monitor, notebooks, folders and printer. The work unit is equipped with functional features typically used in this type of furniture, such as extensions (17) to accommodate a computer keyboard or to extract an auxiliary area, a drawer for "kardex" (18), a closed cabinet (19), a bookshelf or shelf (20) and a large work surface (21).

Fig. 35 is an isometric view where a furniture structure is drawn comprised of an array of a plurality of different boxes, whose measurements and structural characteristics enable them to be organized so that the arrangement functions as a piece of bedroom furniture, whose proportion relates to box (14) and to a bedside table (22); equipped with functional features typically used in this type of enclosure, such as that indicated, a chest of drawers (23), a multiple-use cabinet with two folding doors, bookcase and shelves (20).

Fig. 36 is a front perspective view of a furniture structure comprised of an array of a plurality of different boxes, whose measurements and structural characteristics enable them to be organized so that the arrangement functions as a piece of multiple-use furniture, whose proportion relates to the box (14); and it is comprised of different type of furniture such as a closet (25), a work unit (26), an audio and video rack (27) and a bookcase (20).

Next, we will describe an example of application of this modular flatpack furniture manufacturing system, to produce a particular component of said pieces of furniture, of drawer-type, required when the rigid boxes are used as functional and structural support of the drawer component of the piece of furniture.

The production of a type of drawer flush with the edge of the container boxes will be described; requiring the adjustments that should be made to the panels with which said boxes are constructed, a modification that does not alter the capacity for combination between them, nor the arrangement of the boxes constructed with them; the characteristics of each one of the panels comprising a drawer will be described, as regards the measurements and the assembly mechanisms, and an array of panels which shows the capacity for combination between them to construct different drawers will be described.

The capacity for combination between the panels to construct different drawers is based on the use of complementary assembly means between one panel and another. The modular measurements of the sides of said drawer panels permits making them from different sizes, so that arrangements thereof describe the same shape and perimeter measurement, which means that they can be interchangeably inserted in the same container.

The lower end of Fig. 37 shows a plan view of panel (1), whose characteristics have been described in detail. Panel (28) is panel (1) with an intervention at both ends of the edge of the side with the female part (3) of the assembly mechanism, consisting of cutting a section (Sc1) whose measurements are the panel thickness, the width of the volumetric body of the assembly mechanism and a length greater than or equal to the panel thickness. Panel (29) is panel (1) with an intervention at both ends of the edge of the side with the male part (2) of the assembly mechanism, consisting of cutting a section (Sc1) whose measurements are the panel thickness, the width of the volumetric body of the assembly mechanism and a length greater than or equal to the width of the panel. Said intervention generates symmetry in the corners of the panel in relation to axis S2, full in panel (29) and empty in panel (28), located at the midpoint of the length of the panel side without the assembly mechanism and perpendicular to said edge.

Figure 38 is an isometric view of a pair of panels (28) and a pair of panels (29) arranged to be coupled, where we can observe that the interventions made in said panels do not affect the multiple coupling capacity thereof. Fig. 39 is an isometric view of an array of four boxes constructed with panels (28) and (29), arranged as they appear in Fig. 31, and fixed by known connectors which are not drawn; so that the modifications made to said panels affects neither the boxes capacity for arrangement or combination.

The arrangement of four boxes, drawn in figure 39, is equivalent in structural, measurement and functional terms to a similar arrangement made with four boxes (14) as appears in Fig. 31; only differentiated by the encounter, always continuous, of the panels arranged in vertical position in the figure. Said continuity is a necessary condition to incorporate flush drawers in the boxes, which are also obtained using panels of type (5), placed in horizontal position, and panels of type (6), in vertical position; and therefore from the point of view of the economy of resources it is also an equivalent solution, as in any case, two types of panels would be necessary (28) and (29) or (5) and (6), to produce it.

Fig. 40 shows a plan view of panel (30) and its symmetrical twin (31). These panels result from the modification of panel (28), making a rectangular section inlay (Sc2) on the edge of one of the sides without the assembly means and, on the opposite side, a triangular section inlay (Sc3); as is shown in the isometric view of the right side of Fig. 40, where the panels (29), (30) and (31) are individualized and which construct the rigid box with which the array of eight boxes is comprised, which appear in the isometric view of Fig. 41, which are ordered in all the combinations which a pair of boxes offers, the panels (29) always being in vertical position.

The arrangement of eight boxes of Fig. 41 is equivalent in structural, measurement and functional terms to a similar arrangement made with panels of type (5) and (6). To resolve the construction of said boxes with panels (5) and (6) is an even more economical solution, because the side inlays (Sc2) and (Sc3) made in panels (30) and (31) can be synthesized in a single panel (5), given the symmetry said panel has, due to having the same part of an assembly mechanism on opposite sides of the same panel, permits that it can be coupled interchangeably, rotated by 180°, something which does not occur with panel (30) and from here the necessity to incorporate panel (31). The coupling of panels (29) with panels (30) or (31), generates a delay in the encounter of the panel edges, whose form is described by a continuous plane, of profile (Sc2) and (Sc3), located on the front and bottom of the boxes, flush with the panel edges.

The arrangement drawn in the right upper front isomeric view of Fig. 42 is comprised of an array of four identical boxes (38), constructed by the coupling of panels (30) and (31) with panels similar to panel (29), differentiated by the measurement of the side without the assembly mechanism being double the measurement of said side of said panel, containing two drawer units (32), three drawer units (33), four drawer units (34) and six drawer units (35); whose drawer fronts are flush with said plane, and the measurement ratio between the length of the heights of the drawer fronts (32), (33), (34), and (35) and the length of the panel side without box (36) assembly mechanism, vertical in the figure, is modular.

The array of boxes (36) of Fig. 42, drawn in the isometric view of Fig. 43 is arranged in the same manner, but each one of the boxes is rotated 180° over themselves on the horizontal plane, as with the front drawer panels; so that, with the same panels, two different expressions are produced for the same furniture solution, equivalent from a structural, functional, dimensional, framework point of view, and as an arrangement of an array of constructed boxes. It also maintains the continuum of the flush plane on the front and bottom of the boxes, when they are arrangements of independent boxes, as can be appreciated in Fig. 43; where it replaces the box (36) containing six drawers (35), of the right end; by two boxes (37) containing three drawers (35), each one, constructed with panels (29), (30) and (31).

The box (36) is equipped with six drawers (35), drawn in the isometric view of Fig. 44, equipped with rails (38) for the displacement and support of the drawers (35), which have a shape and posture within the box which is symmetrical in relation to rotations thereof of 180° on the vertical and horizontal plane, not varying its capacity to slide and support drawers (35), drawn at the left side of the figure; and a rear panel (39), drawn at the centre of the figure.

The boxes' (36) capacity to contain the different drawer (32), (33), (34) and (35) is shown in the side elevation of Fig. 45, where the vertical panel of the boxes (36), and its equivalent of boxes (37) has been removed, for the purpose of showing the support means within the box to each one of the four types of drawers (32), (33), (34) and (35). The position of the rails (38) for drawers (35), and its similar ones to support and transport the drawers (32), (33) and (34) is shown drawn with a dotted line at the left side of Fig. 45.

The drawers are constructed with five panels, as is shown in the isometric view of Fig. 46. Said panels are: a front drawer (40), two side panels (41) and (42), a rear panel (43) and a base drawer panel (44).

The drawer front (40) is a panel provided with a part (45) of the coupling mechanism compatible with part (48) of the coupling mechanism of the side panels (41) and (42); two grooves (46) to couple the base drawer panel (44); a groove (47) to incorporate a knob on the drawer front (40); and the edges of the sides parallel to the grooves to couple the base (44), have a form complementary to the section (Sc2) and (Sc3) on opposite sides, located on the edge of the panels (30) and (31) of the boxes containing said drawers. The coupling mechanisms (45) and (48) are complementary, and the method of assembly between them permits the drawer front (40) to be detached from the side panels (41) and (42), the other drawer panels staying adhered to one another. Said mechanisms are located, in relation to the sides of the panel, so that, by rotating the panel 180° on the vertical plane, there is capacity to couple with the drawer structure that has remained intact. In the trade, there are standard metal tools which can join two panels with said requirements.

The side panels (41) and (42) are equipped with one part (48) of the coupling mechanism for the front drawer panels (40); a mechanism (49) compatible with the rail and support mechanism (38), drawn in box (36) of Fig. 44; a groove (46) to couple the base drawer panel (44); and a part of the assembly mechanism (3) compatible with part (2) located on the edges of the rear panel (43). Panel (43) is provided with a groove (46) to couple with the base drawer panel (44); and on opposite edges, part (2) of the coupling mechanisms compatible with the side panels (41) and (42).

The drawer fronts of drawers (32), (33), (34) and (35) connect to the side panels in two different positions, symmetrical in relation to the rotation of the part by 180° on the vertical plane to the plane of use, preserving intact the drawer structure frame; and they are adapted interchangeably to the straight edge (Sc2) or beveled edge (Sc3) of panels (30) and (31); and, in that way, the continuum of the flush plane is preserved, even when the drawer support mechanism is found in different boxes, as can be observed in the arrangement of boxes (37) which appears on the right side of Fig. 43.

The panels to construct drawers maintains the capacity for combination, characteristic of the panels to construct rigid boxes, achieved by the simultaneous use of different types of assembly mechanisms constructed on the same panel; as occurs with panels of type (41) and (42), where it occupies four different mechanisms, compatible with their complementary parts, located on independent panels. Fig. 47 is an isometric view of the different panels which form drawers (32), (33), (34) and (35), where the coupling mechanisms of each panel can be seen in detail.

Fig 48 is a plan view of a series of front drawer panels, which result from incorporating the assembly mechanisms (45) and (46), the extraction mechanism (47), and sections Sc1 and Sc2 of panel (40) in panels of different measurements, preserving the distance between the edges of the panel and the edges of the different mechanisms which are on panel (40). The measurements a", b", c", d", e" and f" of the sides of said front drawer panels, correspond to the measurements of the different sides of the assembly mechanism of the panels forming the boxes containing said drawers.

Fig. 49 and Fig. 50 are a plan view of a series of side drawer panels, which result from incorporating the assembly mechanisms (3) and (46) of panel (41); and the assembly mechanisms (3), (48), (49) and (46) of panel (42) respectively; on panels of different measurements, preserving the distance between the panel edges and the edges of said assembly mechanisms are found on panels (41) and (42). The measurements b', c', d', e' and f' of the side of said side drawer panels, correspond to the measurements of the sides with the assembly mechanism of the panels forming the boxes containing said drawers.

Fig. 51 is a plan view of a series of rear drawer panels, which result from incorporating assembly mechanisms (2) and (46) as are found on panel (43), on panels of different measurements, preserving the distance between the panel edges and the edges of said assembly mechanisms. Measurements "a", b", c", d", e" and f" of the sides of said rear drawer panels, correspond to the measurements of the sides without the assembly mechanism of the panels forming the boxes containing said drawers.

Fig. 52 is a plan view of a series of base drawer panels which result from projecting the maximum distance between the parts of the mechanism (46) of panels (40), (41), (42) and (43) on panels of different measurements, when they are assembled together by means of coupling of mechanisms (45) with (48) and (2) with (3). The measurements a", "b", c", d", e" and f'; and the measurements b', c', d', e' and f' of the sides of said base drawer panels correspond to the sides of the panels forming said container boxes.

Fig. 53 is a plan view of a series of panels comprised of a series of front drawer panels described in Fig. 48, by an array of side drawer panels with independent coupling mechanisms of the side of the drawer where they occupy; an advantage that is obtained by incorporating the mechanism (46) on panel (42) the same way as it is distributed on panel (40), drawn with a dashed line in Fig. 54; by an array of rear drawer panels, described in Fig. 51; and by an array of base drawer panels described in Fig. 52.

The capacity for combination between the 98 panels drawn in Fig. 53, enables the construction of 120 different boxes; whose variety is comprised of six measurements of the length of drawer fronts; four drawer height measurements; and five different depths. The quantity of panels can be reduced to 88 different panels, when we have a'=a", b'=b", c'=c", d'=d", e'=e" and f'=f", because the panels drawn with a dashed line in the figure are repeated. The measurements drawn in Figs. 48, 49, 50, 51 and 52 are figures of the length of the panel sides. The measurements δ, δ', δ", δ''' and δ'''', relate to the value of the clearance in the panels to avoid friction between the drawer and the containing box, in the parts where the area of the drawer rubs with the box surface, with the aim of facilitating a fluid sliding between said parts of the drawer and box.

Fig. 54 is a plan drawing of the panels comprising the drawer (34) which shows the view of the location of the assembly mechanisms between the panels, and how they are assembled together, in the plan, elevation and profile drawing of the drawer profiles (34) in Fig. 55.

## Claims

1. Furniture production system with a predetermined means of manufacturing, composition and construction, said means being a product comprised of series of structural construction units with prefabricated modular measurements which incorporate, in the same unit, manufacturing, measurement and construction solutions with which we can satisfy the requirements of function, measurement and organization of varied rigid structure models used in furniture products especially conceived to satisfy specific use requirements; and wherein the structural construction units with modular measurements are solid bodies delimited by the volume of a straight rectangular parallelepiped of board or panel-type with constant weight with a measurement which we will call "ε" and with an area other than said thickness delimited by a square, rectangular or trapezoid shape whose sides have a measurement greater than 'ε', **CHARACTERIZED in that** the structural construction units with modular measurements are components of series where the measurement of at least one of the edges of the rectangular or trapezoidal area of each panel belonging to one series is equal to the measurement of at least one of the sides of all of the panels comprising the series; and the proportion between the measurement of at least one of the edges of the rectangular or trapezoidal area of each panel belonging to a series and the measurement of at least one of the sides of all the panels comprising a series is a modular measurement ratio; the array of measurements of one series being formed by a modular measurement unit and by units comprised of consecutive sums of said constant modular measurement unit.

2. Furniture production system with a predetermined means of manufacturing, composition and construction, according to claim 1, **CHARACTERIZED in that** the structural construction panels can be coupled together by means of coupling mechanisms arranged on the sides of the panels of one series whose measurement is equal between one panel and another.

3. Furniture production system with a predetermined means of manufacturing, composition and construction, according to claim 2, **CHARACTERIZED in that** the coupling mechanisms are comprised of two complementary parts which are located at a constant measurement distance from the edges of the panel to the edges of the mechanism between one panel and another; which are compatible to be coupled interchangeably with complementary mechanisms which means maximum combination is obtained between the different panels of one series.

4. Furniture production system with a predetermined means of manufacturing, composition and construction, according to claims 2 or 3, **CHARACTERIZED in that** the coupling mechanisms are a rigid assembly means between two panels in perpendicular planes, with corner joints or flush joint; or in parallel planes, adhered by the area other than the panel thickness; or in a plane, adhered by the area of the panel thickness; and in any case, said coupling mechanisms do not require glue to maintain the panels adhered.

5. Furniture production system with a predetermined means of manufacturing, composition and construction, according to any of claims 2 to 4, **CHARACTERIZED in that** the coupling mechanisms are a means of assembly between panels with modular measurement so that they generate arrangements of panels whose interior or exterior perimeter or both combined, has modular measurements, for which it uses a margin of constant measurement equal to the measurement of the overlap between the panels present in the coupling mechanism; which is incorporated in the modular measurement unit, added to or subtracted from it; necessary to cover all the encounter solutions between the panels equipped with the structural coupling mechanisms.

6. Furniture production system with a predetermined means of manufacturing, composition and construction, according to any of claims 2 to 5, **CHARACTERIZED in that** the coupling mechanisms are a means of addition of modular measurement units with the aim that, by means of the panel coupling with discrete modular measurements, a modular measurement is attained equivalent to the sum of modular units.

7. Furniture production system with a predetermined means of manufacturing, composition and construction, according to any of claims 2 to 6, **CHARACTERIZED in that** the coupling mechanism is of mortise and tenon-type constructed on the edge of a panel, comprised of two complementary parts, each one of them being a succession of volumetric bodies described by the volume of a straight rectangular parallelepiped, distanced from one another by the measurement of the specular projection of the same body; and the sequence of volumetric bodies is arranged in relation to an axis of symmetry located equidistant from the sides of the different panels to those where said assembly mechanism is found, which has two degrees of freedom of movement.

8. Furniture production system with a predetermined means of manufacturing, composition and construction, according to any of claims 2 to 7, **CHARACTERIZED in that** the coupling mechanism is a mortise and tenon or dovetail tongue and groove-type, constructed on the edge of a panel, comprised of two complementary parts, each one of them being a succession of volumetric bodies described by the volume of the rectangular truncated prism, distanced from one another by the measurement of the specular projection of the same body; and the sequence of symmetrical volumetric bodies is arranged in relation to an axis of symmetry located equidistant from the sides of the panel different from those where said assembly mechanism is found, which has one degree of freedom of movement.

9. Furniture production system with a predetermined means of manufacturing, composition and construction, according to any of claims 2 to 8, **CHARACTERIZED in that** the composition of any measurement is obtained by the addition of modular measurement units with a maximum difference between a desired measurement and the measurement attained, equal to the measurement of the modular unit.

10. Furniture production system with a predetermined means of manufacturing, composition and construction, according to any of claims 2 to 9, **CHARACTERIZED in that** the construction of any structure is obtained by the arrangement and fixing of continuous units, flush with one of the edges of all of them, formed by arrangements of arrays of coupled panels, said arrangements being comprised of an array of two coupled panels; or by an array of three panels coupled by opposite sides or by contiguous sides; or by an array of four panels coupled by opposite sides or by contiguous sides; or by an array of five panels coupled by opposite sides or contiguous sides.

11. Furniture production system with a predetermined means of manufacturing, composition and construction, according to any of claims 2 to 10, **CHARACTERIZED in that** the structure obtained by the arrangement and fixing of continuous, flush rigid units describes, on the edges of the exterior or interior perimeter or a combination of both, the geometry described in the square or rectangular geometric pattern matrix .

12. Process for the transformation of manufactured boards into series of panels delimited by modular measurements, wherein said process comprises a stage intended to define a modular measurement unit and a series of modular measurement units comprised of successive sums of that modular unit and a stage to define the cutting axis of a manufactured board in units delimited by said modular measurement units, **CHARACTERIZED in that** the stage intended to define a modular measurement unit uses an array of geometric patterns and comprises the following stages:
(1) generate a first geometric pattern matrix comprised of a plurality of square geometric patterns, which comprise the following steps:
(1a) define an array of square geometric patterns, which are a geometric representation of an array of measurements called "a", "b", "c", "d", "e" and "f", or more, each one of said measurements being reproduced in the sides of the square figures, both square figures and measurements, which we will call square geometric patterns.
(1b) copy each one of said square patterns and group them contiguously, forming columns comprised of adjacent equal squares, whose perimeter edge describes a rectangular shape, whose longest side is equal from one column to another, to which measurement we will call "Z",
(1c) arrange said columns adjacently, so that the perimeter edge of the array of columns describes a rectangular or square shape;
(1d) assign value "a" to the measurement of the shortest side of the square of the array of square patterns, so that "a" is equal to Z/n", where "n" is an even Whole Number greater than 2; resulting that an=Z
(1e) assign value "b" to the length of the shortest side of the array of square patterns, with the exclusion of "a", so that "b" is equal to "Z/m", where "m" is an even Whole Number different from "n", so that bm=Z;
(1f) assign value "c" to a measurement equal to "2a" so that c=2a=2Z/n=Z/n/2;
(1g) assign value "d" to a measurement equal to "2b" so that d=2b=2Z/m=Z/m/2;
(1h) assign value "e" to a measurement equal to "2c", and therefore "4a", so that e=4a=4Z/n=Z/n/4;
(1i) assign value "f" to a measurement equal to "2d", and therefore "4b", so that f=4b=4Z/m=Z/m/4;
(1j) define the last element of the series, whose value is "Z/2";
wherein the measurements with values different from "a" and "b" form two series made up of measurements which are duplications of the value of the previous component; i.e. an array of measurements which are even multiples of each one of the measurements "a" and "b", equal to "2a" "4a" "8a" or greater; and "2b", "4b", "8b" or greater, respectively; so that the difference between the value of one measurement and the next of the same series, is equal to the value of each one of them, i.e. "2a", "4a", or greater; and "2b", "4b" or greater, respectively; with which we attain a difference between the values of the measurements of the elements of the same series equivalent to a constant multiplied by non-consecutive whole numbers; to find a constant, consecutive difference between the value of the modular measurements comprising the series multiples of "a" and "b", one of these values is used as the auxiliary measurement and comprises the following stages:
(1k) select one of the measurements "a" or "b", whose value will be the constant, consecutive difference, which we will call modular unit; and we will call the non-selected measurement the auxiliary measurement;
(1l) define the quantity of modular units one wants to arrange, which we will call the desired measurement; and it corresponds to that measurement that consecutively links, by means of a constant difference, two measurements comprising the same series of measurements of the matrix generated in the stage (1);
(1m) identify the column comprised of the geometric pattern whose side has a measurement which is immediately greater than the desired measurement in the matrix generated in stage (1j);
(1n) identify the column comprised of the geometric pattern whose side has a measurement which is immediately lower than the desired measurement in the matrix generated in stage (1j);
(1o) identify the column which is between the columns identified in step (1m) and (1n) in the matrix generated in stage (1j);
(1p) equal the desired measurement with the measurement of the side of the geometric pattern of the column identified in step (1o);
(1q) replace the value of the desired measurement by its equivalent expressed in terms of the amount of times that said measurement is contained in the length "Z"; and replace the value of the auxiliary measurement by its equivalent expressed in terms of the amount of times that it is contained in the length "Z"; and with this, one finds the measurement ratio n:m between value "n" and value "m" which generates the desired value, e.g. if measurement "a" is selected as modular unit, and one wants to obtain a measurement equivalent to "3a" units, then the measurement "3a" should be equalled with the measurement "2b" given that the column composed of measurements "2b" is found in the columns comprised of the measurements "2a" and "4a"; so that equalling "2b" with "3a", and replacing "a" by Z/n and "b" by "Z/m", results in 2Z/n=3Z/m, from where it is established that n:m=2:3; and we obtain a series of measurements produced by the units "a", "2a", "3a" and "4a"; with a constant difference of "a" units; and a series of measurements comprised of the units "2a", "3a" and "6a"; with a constant difference of "2a" units;
(2) generate a second geometric pattern matrix comprised of a plurality of rectangular geometric patterns which are the product of combining the measurements defined in stage (1), which comprises the following steps:
(2a) group all the square geometric patterns defined in the matrix generated in stage (1) by the vertices, so that the diagonal of each one of them is aligned with one of the others;
(2b) combine the measurements of the sides of the square geometric patterns defined in the matrix generated in stage (1), by the projection of each one of said measurements with all the others, for which we should
(2c) copy the layouts of the sides of the square geometric patterns defined in the matrix generated in stage (1), aligned according to step (2a) and transfer said layouts to a distance equal to the measurement of each one of the sides of the other square patterns, managing to delimit rectangular geometric patterns, arranged in series comprised of geometric patterns which have a side whose measurement is common to all of them and one side whose measurement is modular between them; series which can be distinguished in the rows and columns of the matrix.

13. Process for the transformation of manufactured boards into series of panels delimited by modular measurements, according to claim 12, **CHARACTERIZED in that** the stage to define the cutting axes of a manufactured board in units delimited by said modular measurement units uses the array of geometric patterns defined in stages (1) and (2) to layout the cutting axis of an area delimited by parallelepiped layouts with constant measurements, equivalent to the area of a manufactured board, standard in the trade, wherein said table has a length "L" and a width "M" and a thickness "ε", so that each one of said geometric patterns is a whole fraction of said area and with which we can optimize the usage of the material of manufactured boards; and comprises the following stages:
(3) generate a third geometric pattern matrix comprised of the repetition of any one of the square or rectangular geometric patterns obtained in the matrix generated in stage (1) and in the matrix generated in stage (2), which comprises the following steps:
(3a) define a square area with sides "Z" by "Z" units,
(3b) select any one of the square or rectangular geometric patterns obtained in the matrix generated in stage (1) or in the matrix generated in stage (2),
(3c) make one of the vertices of the geometric pattern selected coincide with one of the vertices of the area defined in step (3a), so that at least one of the sides of the geometric pattern is parallel to any of the sides of said area,
(3d) reproduce the geometric pattern selected and distribute it inside the area defined in step (3a) so that each one of the copies of said pattern is adjacent to another on one of its sides, and flush on the non-adjacent sides; as many times as necessary to form a column whose longest side has a measurement equal to the measurement "Z",
(3e) reproduce the column obtained in step (3d) and distribute it so that each one of its copies is adjacent to another and flush with the non-adjacent ends; as many times as are necessary to produce that the value of the sum of the sides of shortest length of the columns is equal to the measurement "Z"; and with this produce that any of the square or rectangular geometric patterns are a whole fraction of a square area with side "Z";
(4) layout the cutting axes of each one of the panels on a manufactured board,
wherein said board has a length "L" and a width "M" and a thickness "ε", which comprises the following steps:
(4a) define a value that we will call "X", so that X=L/Z;
(4b) multiply the measurement of the side parallel to the measurement "Z" of each one of the geometric patterns defined in stage (1) by the "X"
(4c) define a value that we will call "Y", so that Y=M/Z;
(4b) multiply the measurement of the side not parallel to the measurement "Z" of each one of the geometric patterns defined in stage (1) by value "Y";
(4e) repeat stage (2) with the geometric patterns produced as a result of performing step (4b) and (4d);
(4f) repeat stage (3) with the geometric patterns produced as a result of performing step (4e);
(4g) use the layouts parallel and perpendicular to the edges of the area with sides "L" by "M" produced in step (4f) to make, by means of them, the layout cut of the board.

14. Process for the transformation of manufactured boards into series of panels delimited by modular measurements, according to claims 12 or 13, **CHARACTERIZED in that** the value "X" can have the value "X' ", where X'<UZ to obtain a modular measurement in particular, where "an<L"; and the value of "Y" may have a value "Y' ", where Y'<M/Z to obtain a modular measurement in particular.

15. Process for the transformation of manufactured boards into series of panels delimited by modular measurements, according to claims 12 to 15, **CHARACTERIZED in that** the panels are components of the series where the measurement of at least one of the edges of the rectangular or trapezoid area of each panel belonging to one series is equal to one of the sides of all the panels comprising the series; measurement which is "a", "2a", "3a", "4a", or any other multiple of "a", or alternatively "b", "2b", "3b", "4b", or any other multiple of "b" and the proportion between the measurement of at least one of the edges of the rectangular or trapezoid area of each panel belonging to one series and the measurement of at least one of the sides of all the panels comprising the series is a modular measurement ratio; a measurement that is "a", "2a", "3a", "4a" or any other multiple of "a", or alternatively "b", "2b", "3b", "4b", or any other multiple of "b" being the array of measurements of a series formed by a modular measurement unit and by units comprised of consecutive sums of said constant unit of modular measurement; a measurement that is "a", "2a", "3a", "4a" or any other multiple of "a", or alternatively "b", "2b", "3b", "4b", or any other multiple of "b".
